# EUROPEAN PATENT APPLICATION

(11) **EP 4 823 181 A1**
(43) Date of publication of application: **14.10.2026**
(21) Application number: 23960817.7
(22) Date of filing: 07.12.2023
(51) Int. Cl.: H04W 36/08, H04W 12/0431

(54) **TERMINAL DEVICE, BASE STATION DEVICE, AND WIRELESS COMMUNICATION SYSTEM**

(71) Applicant: 1FINITY INC., Kawasaki-shi, Kanagawa 211-8588 (JP)
(72) Inventor: HORI, Takako, Kawasaki-shi, Kanagawa 211-8588 (JP); HIGASHI, Yuma, Kawasaki-shi, Kanagawa 211-8588 (JP); UEMURA, Katsunari, Kawasaki-shi, Kanagawa 211-8588 (JP)
(74) Representative: Haseltine Lake Kempner LLP
(86) International application number: PCT/JP2023/043843
(87) International publication number: WO 2025/120804

(57) **Abstract**

A terminal apparatus includes a receiver and a processor. The receiver is configured to receive, from a base station apparatus, a radio resource control (RRC) reconfiguration message including a reconfiguration with synchronization. The processor is configured to execute handover in response to the RRC reconfiguration message. The processor is configured to perform control to execute first processing in a case where a failure of the handover is detected. The first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.

## Description

### [Technical Field]

The present embodiment relates to a terminal apparatus, a base station apparatus, and a radio communication system.

### [Background Art]

In current networks, networks of radio communication using mobile terminals (smartphones or feature phones) and the like are expanding. In the expansion of radio communication, there are needs for higher speeds and larger capacities.

In the 3rd Generation Partnership Project (3GPP^{®}), which is an international standardization project, technical study and standard formulation of a cellular mobile communication system have been performed. For example, Evolved Terrestrial Radio Access (E-UTRA) is standardized as a radio access technology (RAT) for 3.9th Generation (3.9G) or 4th Generation (4G), and Evolved Packet Core (EPC) is standardized as a core network (CN) technology. In addition, New Radio (NR) is standardized as a 5th Generation (5G) RAT, and 5G Core (5GC) is standardized as a core network technology. In addition, these expansion technologies are currently and continuously being studied and standardized.

Technologies related to NR or the 5G system are disclosed in, for example, the following Non Patent Documents 1 to 9.

### [Citation List]

### [Non Patent Document]

[Non Patent Document 1] 3GPP TS38.300 V17.6.0 NR Overview Specification
[Non Patent Document 2] 3GPP TS38.211 V17.6.0 NR PHY Channel and Modulation Specification
[Non Patent Document 3] 3GPP TS38.321 V17.6.0 NR MAC Specification
[Non Patent Document 4] 3GPP TS38.322 V17.3.0 NR RLC Specification
[Non Patent Document 5] 3GPP TS38.323 V17.5.0 NR PDCP Specification
[Non Patent Document 6] 3GPP TS37.324 V17.0.0 NR SDAP Specification
[Non Patent Document 7] 3GPP TS38.304 V17.6.0 NR Idle Mode and Inactive Mode Specifications
[Non Patent Document 8] 3GPP TS38.331 V17.6.0 NR RRC Specification
[Non Patent Document 9] 3GPP TS33.501 V17.11.1 5G System Security Specification
[Non Patent Document 10] 3GPP RP-223520 "Revised WID on Further NR mobility enhancements"

### [Summary of Invention]

### [Technical Problem]

As one expansion technology, a technology related to improvement of mobility has been studied. As one of the study items, there is a technology called L1/L2-triggered mobility (LTM), which aims to achieve effects such as shortening of a delay time in mobility by changing a serving cell of a terminal apparatus using a signal on the layer 1 and/or the layer 2 (Non Patent Document 10).

However, a specific method of the LTM is not determined as a standardized specification. For example, a specification of a specific procedure of establishing and releasing a radio bearer when cell change processing is performed is not determined.

Therefore, one disclosure is to provide a base station apparatus, a terminal apparatus, and a radio communication system that enable efficient radio bearer establishment and release processing when cell change processing is performed.

### [Solution to Problem]

According to an aspect of the embodiments, a terminal apparatus including: a receiver configured to receive, from a base station apparatus, a radio resource control (RRC) reconfiguration message including a reconfiguration with synchronization; and a processor configured to execute handover in response to the RRC reconfiguration message. The processor is configured to perform control to execute first processing in a case where a failure of the handover is detected. The first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.

According to an aspect of the embodiments, a base station apparatus including: a transmitter configured to transmit, to a terminal apparatus, a radio resource control (RRC) reconfiguration message including a reconfiguration with synchronization; and a processor configured to cause the terminal apparatus to execute handover by transmitting the RRC reconfiguration message to the terminal apparatus. The processor is configured to perform control to cause the terminal apparatus to execute first processing in a case where the terminal apparatus detects a failure of the handover. The first processing is processing of performing control such that the terminal apparatus performs LTM cell switching according to a first configuration including one or a plurality of cell change destination candidates in a case where a security key is updated when executing the handover, and performing control to cause the terminal apparatus to request reestablishment of an RRC connection in a case where a security key is not updated when executing the handover.

According to an aspect of the embodiments, a radio communication system including: a base station apparatus configured to transmit a radio resource control (RRC) reconfiguration message including a reconfiguration with synchronization; and a terminal apparatus configured to receive the RRC reconfiguration message and execute handover according to the RRC reconfiguration message. The terminal apparatus is configured to perform control to execute first processing in a case where a failure of the handover is detected. The first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.

### [Advantageous Effects of Invention]

According to one disclosure, it is possible to perform communication that enables efficient radio bearer establishment and release processing when the terminal apparatus performs cell change processing.

### [Brief Description of Drawings]

Fig. 1 is a diagram illustrating an example of a configuration of a communication system 10;
Fig. 2 is a diagram illustrating an example of a configuration of a base station apparatus 200;
Fig. 3 is a diagram illustrating an example of a configuration of a terminal apparatus 100;
Fig. 4 is a diagram illustrating an example of a protocol stack of a U-plane;
Fig. 5 is a diagram illustrating an example of a protocol stack of a C-plane;
Fig. 6 is a diagram illustrating an example of a message format of RRC Reconfiguration;
Fig. 7 is a diagram illustrating an example of a configuration of a cell group of a communication system 10;
Fig. 8 is a diagram illustrating an example of reconfiguration with synchronization;
Fig. 9 is a diagram illustrating an example of a handover procedure based on four-step random access;
Fig. 10 is a diagram illustrating an example of a sequence in LTM;
Fig. 11 is a diagram illustrating an example of a sequence in cell switching failure detection and cell switching failure processing;
Fig. 12 is a diagram illustrating an example of a first cell switching failure processing method;
Fig. 13 is a diagram illustrating an example of a second cell switching failure processing method;
Fig. 14 is a diagram illustrating an example of a third cell switching failure processing method;
Fig. 15 is a diagram illustrating an example of a fourth cell switching failure processing method;
Fig. 16 is a diagram illustrating an example of processing according to a selected cell; and
Fig. 17 is a diagram illustrating an example of parameters related to LTM.

### [Description of Embodiments]

Hereinafter, the present embodiment will be described in detail with reference to the drawings. The problems and examples in the present specification are merely examples, and do not limit the scope of rights of the present application. In particular, even if the expressions are different, as long as the expressions are technically equivalent, the technology of the present application can be applied to even different expressions, and the scope of rights is not limited.

In addition, in the present embodiment, in a case where the radio access technology is E-UTRA or NR and a case where the core network is the EPC or the 5GC, names, processes, and the like of an apparatus, a node, a function, a protocol, an entity, signaling, a message, a parameter, and the like will be described, but the embodiment may be used for other radio access technologies. The names of respective nodes and entities in each embodiment may be different names.

### <Configuration Example of Communication System 10>

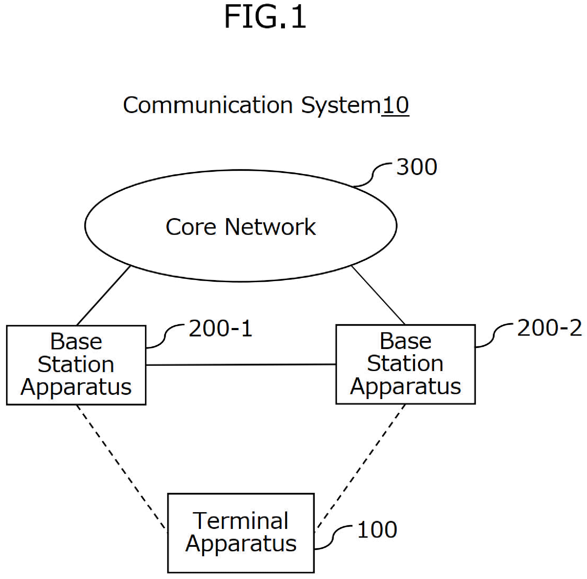

Fig. 1 is a diagram illustrating an example of a configuration of a communication system 10. The communication system 10 includes a terminal apparatus 100, base station apparatuses 200-1 and 200-2, and a core network 300. The communication system 10 may be a radio communication system in which the terminal apparatus 100 performs communication with the base station apparatus 200-1 or the base station apparatus 200-2, or may be a radio communication system in which the terminal apparatus 100 performs communication with the base station apparatus 200-1 and the base station apparatus 200-2 via multi radio dual connectivity (MR-DC) which will be described later. In a case where communication is performed via MR-DC, for example, the base station apparatus 200-1 is a master base station apparatus, and the base station apparatus 200-2 is a secondary base station apparatus. Hereinafter, the master base station apparatus may be referred to as a master node (MN), and the secondary base station apparatus may be referred to as a secondary node (SN).

The terminal apparatus 100 is wirelessly connected to one or both of the base station apparatus 200-1 and the base station apparatus 200-2, and performs radio communication. A RAT that provides the radio connection is, for example, E-UTRA or NR. The terminal apparatus 100 is a terminal apparatus compatible with one or both of E-UTRA and NR.

The base station apparatuses 200-1 and 200-2 (hereinafter, the base station apparatuses may be referred to as base station apparatus 200) are communication apparatuses that are wirelessly connected to the terminal apparatus 100 and perform radio communication. In addition, the base station apparatuses 200-1 and 200-2 are connected to each other by wire, for example, and perform communication. The base station apparatus 200 is connected to the core network 300 by, for example, wire, and performs communication. The base station apparatus 200 is, for example, a base station apparatus of either an eNodeB (eNB) that provides E-UTRA as the RAT or a gNodeB (gNB) that provides NR as the RAT.

The core network 300 is a network corresponding to a certain generation. The core network 300 is, for example, the 5GC which is a core network standardized for 5G or the EPC which is a core network standardized for 4G.

Details of the MR-DC implemented in the communication system 10 will be described later.

### <Configuration Example of Base Station apparatus 200>

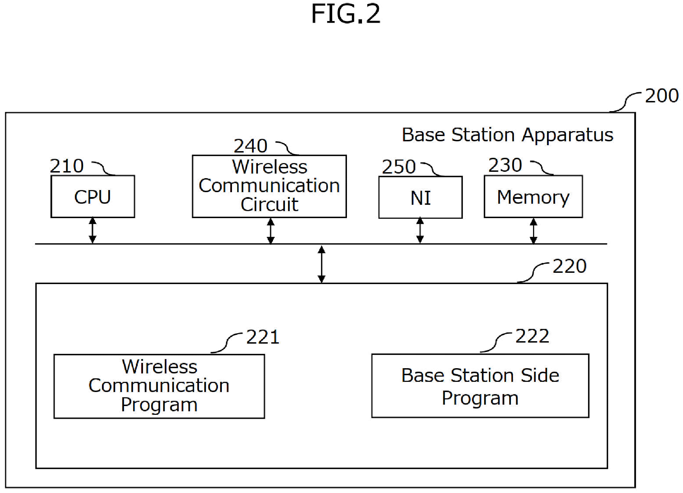

Fig. 2 is a diagram illustrating an example of a configuration of the base station apparatus 200. The base station apparatus 200 is a communication apparatus or a relay apparatus including a central processing unit (CPU) 210, a storage 220, a memory 230, a radio communication circuit 240, and a network interface 250.

The storage 220 is an auxiliary storage device such as a flash memory, a hard disk drive (HDD), or a solid state drive (SSD) that stores programs and data. The storage 220 stores a radio communication program 221 and a base-station-side program 222.

The memory 230 is an area in which a program stored in the storage 220 is loaded. In addition, the memory 230 may also be used as an area in which a program stores data.

The radio communication circuit 240 is a circuit that is wirelessly connected to the terminal apparatus 100 and performs communication. The base station apparatus 200 receives a signal transmitted from the terminal apparatus 100 via, for example, the radio communication circuit 240, and transmits a signal to the terminal apparatus 100.

The network interface (NI) 250 is, for example, a communication device that is connected to another base station apparatus 200 and realizes communication between base stations. In addition, the NI 250 is, for example, a communication device that is connected to the core network 300 (a communication device included in the core network 300) and performs communication. The NI 250 is, for example, a network interface card (NIC). The base station apparatus 200 receives a signal from another communication apparatus and transmits a signal to the other communication apparatus via the NI 250.

The CPU 210 is a processor that loads a program stored in the storage 220 into the memory 230, executes the loaded program, constructs each unit, and realizes each type of processing.

The CPU 210 performs radio communication processing by executing the radio communication program 221. The radio communication processing is processing of wirelessly connecting the base station apparatus to the terminal apparatus 100 to perform radio communication with the terminal apparatus 100, or relaying communication performed by the terminal apparatus 100 with another communication apparatus.

The CPU 210 constructs a second transmitter, a second receiver, and a second processor and performs base-station-side processing by executing the base-station-side program 222. In a case where the base station apparatus 200 performs communication with the terminal apparatus 100 by using the MR-DC, the base-station-side processing may include MR-DC master node processing and MR-DC secondary node processing. In this case, the MR-DC master node processing is processing for performing master-node-side control in the MR-DC, and the MR-DC secondary node processing is processing for performing secondary-node-side control in the MR-DC. The base station apparatus 200 performs communication corresponding to each type of MR-DC, which will be described later, in the MR-DC master node processing and the MR-DC secondary node processing.

### <Configuration Example of Terminal apparatus 100>

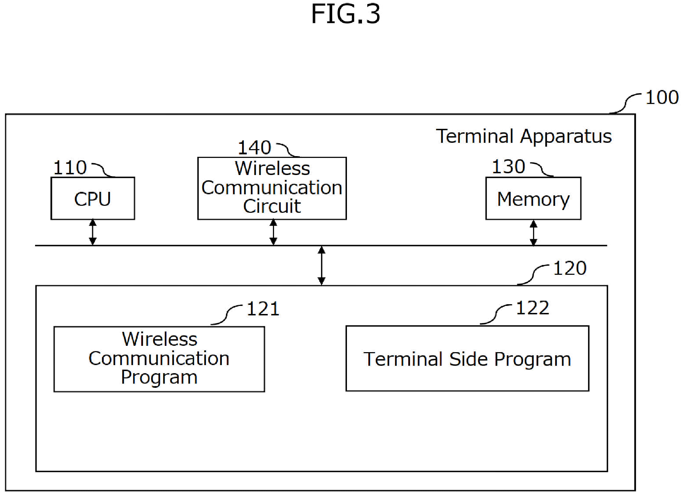

Fig. 3 is a diagram illustrating an example of a configuration of the terminal apparatus 100. The terminal apparatus 100 is a communication apparatus including a CPU 110, a storage 120, a memory 130, and a radio communication circuit 140.

The storage 120 is an auxiliary storage device such as a flash memory, an HDD, or an SSD that stores programs and data. The storage 120 stores a radio communication program 121 and a terminal-side program 122.

The memory 130 is an area in which a program stored in the storage 120 is loaded. In addition, the memory 130 may also be used as an area in which a program stores data.

The radio communication circuit 140 is a circuit that is wirelessly connected to the base station apparatus 200 and performs communication. The terminal apparatus 100 receives a signal transmitted from the base station apparatus 200 and transmits a signal to the base station apparatus 200 via, for example, the radio communication circuit 140. The radio communication circuit 140 is, for example, a network card that supports radio connection.

The CPU 110 is a processor that loads a program stored in the storage 120 into the memory 130, executes the loaded program, constructs each unit, and realizes each type of processing.

The CPU 110 performs terminal-side radio communication processing by executing the radio communication program 121. The terminal-side radio communication processing is processing of wirelessly connecting the terminal apparatus to the base station apparatus 200, and performing radio communication with the base station apparatus 200 or performing communication with another communication apparatus via the base station apparatus 200.

The CPU 110 constructs a transmitter, a receiver, and a processor and performs terminal-side processing by executing the terminal-side program 122. In a case where the terminal apparatus 100 performs communication with the base station apparatus 200 by using the MR-DC, the terminal-side processing may include terminal-side MR-DC processing. In this case, the terminal-side MR-DC processing is processing for controlling communication in the MR-DC. In the terminal-side MR-DC processing, the terminal apparatus 100 performs communication corresponding to each type of MR-DC that will be described later.

### <Protocol Stack>

An example of a protocol stack of the communication system 10 will be described. In the communication system 10, a series of protocols for transmitting and receiving data is represented in a hierarchical structure, and is referred to as a protocol stack. In the following example, a case where the base station apparatus 200 is an eNB or a gNB and the core network 300 is the EPC or the 5GC will be described. In addition, the terminal apparatus 100 (user equipment (UE)) corresponds to one or both of E-UTRA and NR.

Hereinafter, protocol stacks of a user plane (U-plane) and a control plane (C-plane) will be described. The U-plane is used, for example, for transmission and reception of user data in communication. The C-plane is used, for example, for transmission and reception of a control signal (message) in communication. Note that, in each embodiment, unless specifically referred to as "user data", "control signal (message)", or the like, the data indicates one or both of the user data and the control signal (message).

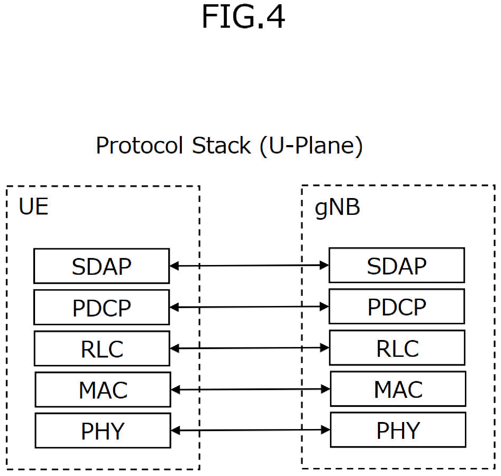

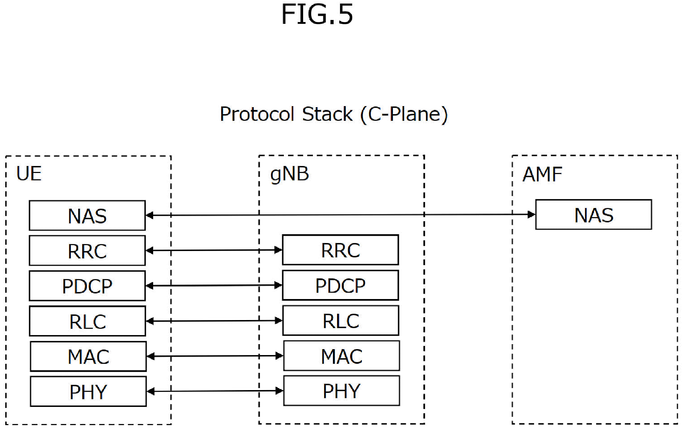

Fig. 4 is a diagram illustrating an example of a protocol stack of a U-plane in a case where the core network 300 is the 5GC. In addition, Fig. 5 is a diagram illustrating an example of a protocol stack of a C-plane in a case where the core network 300 is the 5GC. In Fig. 4 and Fig. 5, Physical (PHY), Medium Access Control (MAC), Radio Link Control (RLC), Packet Data Convergence Protocol (PDCP), Service Data Adaptation Protocol (SDAP), Radio Resource Control (RRC), and Non Access Stratum (NAS) respectively indicate names of layers. Hereinafter, PHY, MAC, RLC, PDCP, SDAP, RRC, and NAS may be respectively referred to as a PHY layer, a MAC layer, an RLC layer, a PDCP layer, an SDAP layer, an RRC layer, and a NAS layer. In addition, MAC, RLC, PDCP, and SDAP may be respectively referred to as a MAC sublayer, an RLC sublayer, a PDCP sublayer, and an SDAP sublayer. In addition, MAC, RLC, PDCP, and SDAP may be respectively referred to as a MAC entity, an RLC entity, a PDCP entity, and an SDAP entity. Note that the protocol stack of the U-plane in a case where the core network 300 is the EPC is a protocol stack in which SDAP in Fig. 4 does not exist. That is, the protocol stack includes PHY, MAC, RLC, and PDCP. In addition, the protocol stack of the C-plane in a case where the core network 300 is the EPC has a form in Fig. 5 in which NAS exists in Access and Mobility management Function (AMF), whereas NAS exists in Mobility Management Entity (MME).

The function in each layer may be common or different between the case where a RAT is E-UTRA and the case where a RAT is NR. In the following description, in a case where there is no designation of E-UTRA or NR, functions are common to E-UTRA and NR.

Note that, in each sublayer, data provided from an upper layer and data provided to the upper layer will be referred to as a service data unit (SDU). That is, data provided from the upper layer to MAC, RLC, PDCP, and SDAP, and data provided from MAC, RLC, PDCP, and SDAP to the upper layer will be respectively referred to as a MAC SDU, an RLC SDU, a PDCP SDU, and an SDAP SDU.

In addition, in each sublayer, data provided to a lower layer and data provided from the lower layer will be referred to as a protocol data unit (PDU). That is, data provided from MAC, RLC, PDCP, and SDAP to the lower layer and data provided from the lower layer to MAC, RLC, PDCP, and SDAP will be respectively referred to as a MAC PDU, an RLC PDU, a PDCP PDU, and an SDAP PDU. In addition, a PDU for control exists in RLC, PDCP, and SDAP, and may be referred to as a control PDU. In addition, in order to distinguish other PDUs from the control PDU, other PDUs may be referred to as data PDUs.

In Fig. 4, the U-plane includes PHY, MAC, RLC, PDCP, and SDAP, and terminates at the terminal apparatus 100 (UE) and the base station apparatus 200 (gNB).

An example of a function of PHY will be described. PHY is a radio physical layer, and transmits control information and data between the terminal apparatus 100 and the base station apparatus 200 by using a physical channel. A direction from the base station apparatus 200 to the terminal apparatus 100 may be referred to as a downlink (DL), and a direction from the terminal apparatus 100 to the base station apparatus 200 may be referred to as an uplink (UL). In addition, in the terminal apparatus 100 and the base station apparatus 200, PHY is connected to MAC which is an upper layer via a transport channel, and data is transferred between PHY and MAC through the transport channel. In PHY, a radio network temporary identifier (RNTI) is used to identify various types of control information.

An example of a function of MAC will be described. MAC is a medium access control layer, and performs mapping between a transport channel and a logical channel (LCH), multiplexing and demultiplexing of the MAC SDU, scheduling report (SR), error correction through hybrid automatic repeat request (HARQ), priority control, and the like. In the terminal apparatus 100 and the base station apparatus 200, MAC is connected to RLC which is an upper layer via a logical channel, and data is transferred between MAC and RLC through the logical channel. The logical channel may be identified by a logical channel identifier (LCID). In addition, the base station apparatus 200 controls the terminal apparatus 100 by using a MAC control element (CE). In addition, the terminal apparatus 100 provides report or the like to the base station apparatus 200 by using the MAC CE.

RLC is a radio link control layer, and has three modes such as a transparent mode (TM), an unacknowledged mode (UM), and an acknowledged mode (AM). RLC performs transfer of the PDU, assignment of a sequence number (in the case of the UM and the AM), division of the SDU (in the case of the UM and the AM), and redivision of the SDU (in the case of AM) on the transmission side, reassembly of the SDU (in the case of the UM and the AM), duplicate detection (in the case of the AM), and discard of the SDU (in the case of the UM and the AM) on the reception side, and performs RLC reestablishment and the like on the transmission side and the reception side. The SDU after division will be referred to as an SDU segment. In addition, RLC has a data retransmission function and/or an automatic repeat request function (ARQ) (in the case of the AM). Note that, in the case of E-UTRA RLC, in addition to the above functions, RLC has a function of combining data on the transmission side, a reordering function and an in-order delivery function on the reception side, and the like.

PDCP is a packet data convergence protocol layer, and performs data transfer in the U-plane and the C-plane, PDCP sequence number management, header compression/decompression, encryption/decryption, integrity protection/integrity verification, timer-based SDU discarding, routing to split bearers, reordering, in-order delivery, and the like. Note that, in E-UTRA PDCP, functions such as timer-based SDU discarding, reordering, and in-order delivery may be limited to, for example, the case of a split bearer.

SDAP is a service data adaptation protocol layer, and performs mapping between a quality of service (QoS) flow and a data radio bearer (DRB) that will be described later, marking of a QoS flow identifier (QFI) to a downlink (DL) packet and an uplink (UL) packet, and the like.

Examples of the upper layer of the U-plane include layers such as Internet Protocol (IP), Transmission Control Protocol (TCP), User Datagram Protocol (UDP), Ethernet^{®}, and an application. Layers including IP, TCP, UDP, Ethernet, and the like may be referred to as PDU layers. In addition, an IP multimedia subsystem (IMS) that performs session control may be included in the application layer.

In Fig. 5, the C-plane of an access stratum (AS) includes PHY, MAC, RLC, PDCP, and RRC, and terminates at the terminal apparatus 100 and the base station apparatus 200. In addition, the C-plane of NAS includes NAS, and terminates between the terminal apparatus 100 and the AMF which is an apparatus of the core network 300. PHY, MAC, RLC, and PDCP are similar to those of the U-plane.

RRC performs broadcasting and paging of system information (SI) related to AS and NAS, establishment/maintenance/release of the RRC connection between the terminal apparatus 100 and the base station apparatus 200, addition/change/release of carrier aggregation (CA), addition/change/release of dual connectivity (DC), security functions including security key management, establishment/configuration/maintenance/release of a signaling radio bearer (SRB) and a data radio bearer (DRB), mobility functions, a QoS management function, control of a terminal apparatus measurement report and reporting, detection and recovery of radio link failure (RLF), transfer of a NAS message, and the like. Note that the radio link failure is, for example, detection of a physical layer problem, a random access failure, or a failure when the maximum number of retransmissions by RLC is reached.

NAS performs authentication, mobility management, security control, and the like on the core network side.

### <Channel>

A channel used in the communication system 10 will be described. Hereinafter, an example of a channel corresponding to NR will be described, but a channel to be used is not limited to the following description. In addition, channels having the same name can be used in the same or similar applications in a RAT other than NR, for example, in E-UTRA.

### <1. Physical Channels>

A physical broadcast channel (PBCH) is a channel used for transmitting broadcast information from the base station apparatus 200 to the terminal apparatus 100. A physical downlink control channel (PDCCH) is a channel used for transmitting downlink control information (DCI) and the like from the base station apparatus 200 to the terminal apparatus 100.

A physical downlink shared channel (PDSCH) is a channel used for transmitting data and the like obtained from an upper layer from the base station apparatus 200 to the terminal apparatus 100.

A physical uplink control channel (PUCCH) is a channel used for transmitting uplink control information (UCI) and the like from the terminal apparatus 100 to the base station apparatus 200.

A physical uplink shared channel (PUSCH) is a channel used for transmitting data and the like obtained from an upper layer from the terminal apparatus 100 to the base station apparatus 200.

A physical random access channel (PRACH) is a channel used for transmitting a random access preamble and the like from the terminal apparatus 100 to the base station apparatus 200.

### <2. Transport Channels>

A broadcast channel (BCH) is mapped to the PBCH which is a physical channel.

A downlink shared channel (DL-SCH) is mapped to the PDSCH which is a physical channel.

A paging channel (PCH) is mapped to the PDSCH which is a physical channel.

An uplink shared channel (UL-SCH) is mapped to the PUSCH which is a physical channel.

A random access channel(s) (RACH) is mapped to the PRACH which is a physical channel.

### <3. Logical Channels>

A broadcast control channel (BCCH) is a downlink channel for broadcasting system information, and is mapped to the BCH or the DL-SCH of the transport channel.

A paging control channel (PCCH) is a downlink channel for carrying a paging message, and is mapped to the PCH of the transport channel.

A common control channel (CCCH) is a channel for transmitting control information (such as an RRC message) between the terminal apparatus 100 and the base station apparatus 200, and is a channel used for the terminal apparatus 100 that does not maintain (does not have) the RRC connection with the base station apparatus 200, in which a downlink is mapped to the DL-SCH of the transport channel and an uplink is mapped to the UL-SCH of the transport channel.

A dedicated control channel (DCCH), which is a point-to-point bidirectional channel, is used for transmitting dedicated control information (such as an RRC message) between the terminal apparatus 100 and the base station apparatus 200, and is used for the terminal apparatus 100 having the RRC connection with the base station apparatus 200, in which a downlink is mapped to the DL-SCH of the transport channel and an uplink is mapped to the UL-SCH of the transport channel.

A dedicated transport channel (DTCH), which is a point-to-point terminal-dedicated bidirectional channel, is used for transmitting user information (user data), in which a downlink is mapped to the DL-SCH of the transport channel and an uplink is mapped to the UL-SCH of the transport channel.

An MBS control channel (MCCH), which is a point-to-multipoint downlink channel, is used for transmitting multicast broadcast service (MBS) broadcast control information corresponding to one or a plurality of MBS traffic channels (MTCHs) from the base station apparatus 200 to the terminal apparatus 100, and is mapped to the DL-SCH of the transport channel.

The MTCH, which is a point-to-multipoint downlink channel, is used for transmitting data of a multicast session or data of a broadcast session in the MBS from the base station apparatus 200 to the terminal apparatus 100, and is mapped to the DL-SCH of the transport channel.

### <RRC State (mode)>

An RRC state of the terminal apparatus 100 is a state related to the RRC connection of the terminal apparatus 100. A state in which the RRC connection with the base station apparatus 200 is not established will be referred to as an RRC idle mode (RRC_IDLE). A state in which the RRC connection with the base station apparatus 200 is established will be referred to as an RRC connection mode (RRC_CONNECTED). A state in which the RRC connection with the base station apparatus 200 is temporarily stopped (suspended) will be referred to as an RRC inactive mode (RRC_INACTIVE). Note that, in a case where the core network 300 is the EPC, the state in which the RRC connection with the base station apparatus 200 is temporarily stopped is not referred to as the RRC inactive mode, and may be referred to as another name such as suspending of RRC.

### <RRC Message>

The RRC message will be described. The RRC message is a message including information needed for performing communication in a cell, and includes a master information block (MIB), a system information block (SIB), and the like. A parameter included in the RRC message may be referred to as a field or an information element (IE).

In addition, the RRC message includes a message related to establishment of the RRC connection. For example, in the case of NR, examples of the message related to the establishment of the RRC connection include an RRC setup request message (RRCSetupRequest), an RRC setup message (RRCSetup), and an RRC setup completion message (RRCSetupComplete). In addition, for example, in the case of E-UTRA, examples of the message related to the establishment of the RRC connection include an RRC connection setup request message (RRCConnectionSetupRequest), an RRC connection setup message (RRCConnectionSetup), and an RRC connection setup completion message (RRCConnectionSetupComplete).

In addition, the RRC message includes a message related to initial activation of access stratum (AS) security. Examples of the message related to the initial activation of the AS security include a security mode command message (SecurityModeCommand).

In addition, the RRC message includes a message related to reconfiguration of the RRC connection. For example, in the case of NR, examples of the message related to the reconfiguration of the RRC connection include an RRC reconfiguration message (RRCReconfiguration) and an RRC reconfiguration completion message (RRCReconfigurationComplete). In addition, for example, in the case of E-UTRA, examples of the message related to the reconfiguration of the RRC connection include an RRC connection reconfiguration message (RRCConnectionReconfiguration) and an RRC connection reconfiguration completion message (RRCConnectionReconfigurationComplete). Note that the message related to the reconfiguration of the RRC connection is used for performing establishment, configuration, change, and release of a radio bearer, a cell group, and the like that will be described later, or reconfiguration with synchronization, and is also used for performing establishment, configuration, change, and release of measurement information and the like.

After the initial activation of the AS security is performed, the terminal apparatus 100 receives a first RRC reconfiguration message from the base station apparatus 200, and thus obtains all the configurations needed for communication (data communication) with the base station apparatus 200 in a cell to which the terminal apparatus 100 is connected or all configurations needed at a minimum. All configurations needed for communication (data communication) with the base station apparatus 200 or all configurations needed at a minimum may be referred to as, for example, complete configurations.

Note that, after the initial activation of the AS security of the terminal apparatus 100 is performed, the base station apparatus 200 can transmit the first RRC reconfiguration message, further transmit another RRC reconfiguration message, and cause the terminal apparatus 100 to update a configuration needed for communication (data communication) with the base station apparatus 200. In this case, the base station apparatus 200 includes, in the RRC reconfiguration message, a difference configuration with respect to the complete configurations currently set in the terminal apparatus 100, and transmits the RRC reconfiguration message. This difference configuration may be referred to as a delta configuration. When receiving the RRC reconfiguration message including the delta configuration, the terminal apparatus 100 generates a new configuration by applying the delta configuration to the complete configurations currently used.

In addition, the RRC message includes a message related to reestablishment of the RRC connection. For example, in the case of NR, examples of the message related to the reestablishment of the RRC connection include an RRC reestablishment request message (RRCReestablishRequest), an RRC reestablishment message (RRCReestablish), and an RRC reestablishment completion message (RRCReestablishComplete). In addition, for example, in the case of E-UTRA, examples of the message related to the establishment of the RRC connection include an RRC connection reestablishment request message (RRCConnectionReestablishRequest), an RRC connection reestablishment message (RRCConnectionReestablish), and an RRC connection reestablishment completion message (RRCConnectionReestablishComplete).

In addition, examples of the RRC message include a message related to release or suspension of the RRC connection, a message related to resumption of the RRC connection, a message related to capability of the terminal apparatus, a message related to terminal information, and a message related to MCG failure information or SCG failure information.

Note that, in the MR-DC, in a case where the master node is an eNB, the eNB may cause the terminal apparatus 100 to perform a configuration related to NR by including, in an RRC message of E-UTRA, as a container, an RRC message of NR received from a gNB which is the secondary node or a parameter related to NR and transmitting the RRC message of E-UTRA to the terminal apparatus 100. In addition, the terminal apparatus 100 may include, in an RRC message of E-UTRA, as a container, a completion message for the configuration related to NR, and transmit the RRC message of E-UTRA to the eNB which is the master node.

In addition, in the MR-DC, in a case where the master node is a gNB, the gNB may cause the terminal apparatus 100 to perform a configuration related to E-UTRA by including, in an RRC message of NR, as a container, an RRC message of E-UTRA received from an eNB which is the secondary node or a parameter related to E-UTRA and transmitting the RRC message of NR to the terminal apparatus 100. In addition, the terminal apparatus 100 may include, in an RRC message of NR, as a container, a completion message for the configuration related to E-UTRA, and transmit the RRC message of NR to the gNB which is the master node.

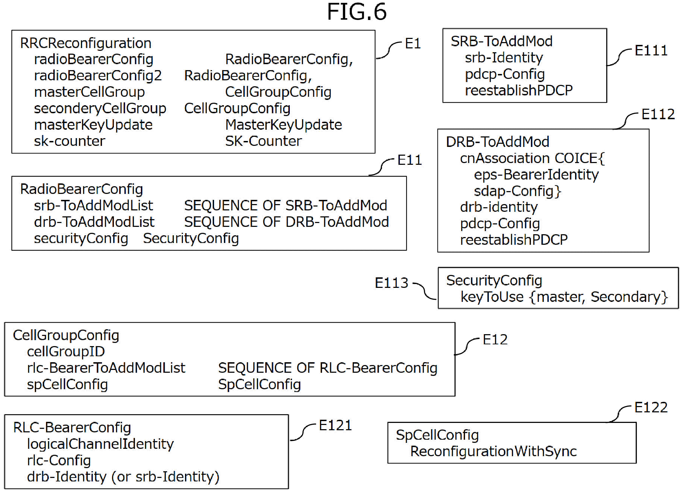

Fig. 6 is a diagram illustrating an example of a message format of RRCReconfiguration. A format E1 relates to parameters of RRCReconfiguration.

RRCReconfiguration includes radioBearerConfig, radioBearerConfig2, masterCellGroup, seconderyCellGroup , masterKeyUpdate, and sk-counter as parameters.

The radioBearerConfig and the radioBearerConfig2 are radio bearer configurations, are configurations related to an MN terminated bearer or an SN terminated bearer, and include an SRB configuration, a DRB configuration, a security configuration, and the like. The SRB configuration (DRB configuration) includes an SRB identifier (DRB identifier), a PDCP configuration, a parameter indicating PDCP reestablishment, and the like. The security configuration includes a parameter (keyToUse) indicating whether to use a master key or a secondary key. The SRB identifier and/or the DRB identifier is referred to as a radio bearer identifier.

The masterCellGroup and the seconderyCellGroup are respectively an MCG configuration and an SCG configuration, and include a cell group identifier, an RLC bearer configuration, a SpCell configuration, and the like. The RLC bearer configuration includes a logical channel identifier, an RLC configuration, a radio bearer identifier (an SRB identifier or a DRB identifier) which is associated with an RLC bearer, and the like. The SpCell configuration includes information needed for reconfiguration with synchronization, and the like.

The masterKeyUpdate includes information needed for master key update.

The sk-counter includes information needed for generating the secondary key.

A format E11 relates to parameters of RadioBearerConfig included in RRCReconfiguration.

A format E12 relates to parameters of CellGroupConfig included in RRCReconfiguration.

A format E111 relates to parameters of SRB-ToAddMod included in RadioBearerConfig.

A format E112 relates to parameters of DRB-ToAddMod included in RadioBearerConfig.

A format E113 relates to parameters of SecurityConfig included in RadioBearerConfig.

A format E121 relates to parameters of RLC-BearerConfig included in CellGroupConfig.

A format E122 relates to parameters of SpCellConfig included in CellGroupConfig.

### <Radio Bearer>

Examples of a radio bearer of the communication system 10 will be described.

### <1. Signaling Radio Bearer>

A signaling radio bearer (SRB) is a radio bearer for transmitting an RRC message or a NAS message.

SRB0 is a radio bearer for an RRC message using a CCCH logical channel.

SRB1 is a radio bearer that is established before SRB2 which will be described later is established and is for an RRC message and a NAS message using a DCCH logical channel.

SRB2 is a radio bearer for transmission and reception of a NAS message, transmission of an RRC message including measurement information in which a history is recorded (logged), and the like, and uses a DCCH logical channel. A priority of SRB2 may be lower than the priority of SRB1, and may be configured by the base station apparatus 200 after the AS security is activated.

SRB3 is a radio bearer for an RRC message in a case where EN-DC, NGEN-DC, or NR-DC is configured in the terminal apparatus 100, and uses a DCCH logical channel. Note that EN-DC, NGEN-DC, and NR-DC are types of MR-DC, and details of the types of MR-DC will be described later.

### <2. Data Radio Bearer>

A data radio bearer (DRB) is a radio bearer for transmitting user data.

### <Protocol Configurations of SRB and DRB>

Protocol configurations of the SRB and the DRB of the terminal apparatus 100 will be described.

SRB0 does not include a PDCP entity, and includes an RLC bearer. The RLC bearer includes an RLC entity and a MAC logical channel. A mode of the RLC entity of SRB0 is a TM.

Each of SRB1 and SRB2 includes one PDCP entity and one or a plurality of RLC bearers. A mode of the RCL entity is an AM.

SRB3 includes one PDCP entity and one RLC bearer. A mode of the RLC entity is an AM.

The DRB includes one PDCP entity and one or a plurality of RLC bearers. A mode of the RLC entity is a UM or an AM. The DBR may be referred to as a UM DBR in a case where the RLC entity is in a UM, and may be referred to as an AM DRB in a case where the RLC entity is in an AM. In addition, the DRB is associated with one SDAP in a case where the core network 300 is the 5GC, and is associated with one EPS bearer (or EPS bearer identity) in a case where the core network 300 is the EPC.

It is assumed that one MAC entity exists for each cell group that will be described below.

### <Cell and Cell Group>

A cell and a cell group (CG) configured for the terminal apparatus 100 will be described.

The cell group may include one special cell (SpCell). In addition, the cell group may include one SpCell and one or a plurality of secondary cells (SCells). Note that an SpCell in a master cell group (MCG) that will be described later may be referred to as a primary cell (PCell). In addition, an SpCell of a secondary cell group (SCG) that will be described later may be referred to as a primary SCG cell (PSCell).

The PCell is a cell using a primary frequency, and is used to establish the RRC connection or reestablish the RRC connection. That is, when the RRC connection is established or the RRC connection is reestablished, a cell selected by the terminal apparatus 100 is the PCell. In addition, when the base station apparatus 200 requests the terminal apparatus 100 to perform a handover that will be described later, a new PCell designated by the base station apparatus 200 is used for random access.

The SCell is a cell that provides additional radio resources in addition to the SpCell in a case where carrier aggregation (CA) is configured in the terminal apparatus 100.

The PSCell is a cell using a primary frequency on the SCG side. The PSCell is designated by the base station apparatus 200, and is used for random access when adding or changing the PSCell in the SCG.

Note that a cell used by the terminal apparatus 100 in the RRC connected state for communication with the base station apparatus 200 may be referred to as a serving cell. In a case where CA is not configured, the SpCell is a serving cell, and in a case where CA is configured, the SpCell and the SCell are serving cells.

The MCG is a CG in a case where the dual connectivity (DC) is not configured in the terminal apparatus 100 or a CG belonging to a master node (MN) in a case where the DC is configured in the terminal apparatus 100. The DC is a technology in which the terminal apparatus 100 is wirelessly connected to the base station apparatus 200 that is a master node and the base station apparatus 200 that is a secondary node (SN), and performs radio communication by using carriers (cell groups) of the respective base station apparatuses 200.

The SCG is a CG belonging to a secondary node configured in addition to the MCG in a case where the DC is configured in the terminal apparatus 100.

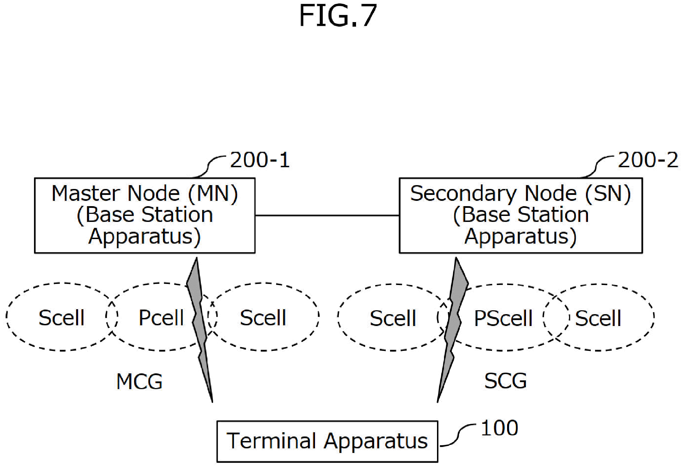

Fig. 7 is a diagram illustrating an example of a configuration of a cell group of the communication system 10. In Fig. 7, the master node (MN) is the base station apparatus 200-1, and the secondary node (SN) is the base station apparatus 200-2. In the MR-DC, the master node is, for example, the base station apparatus 200 that provides C-plane connection to the core network 300. In the MR-DC, the secondary node is, for example, the base station apparatus 200 that does not provide the C-plane to the core network 300 and provides additional radio resources to the terminal apparatus 100. In Fig. 7, the MCG includes, for example, one PCell and two SCells. In addition, in Fig. 7, the SCG includes, for example, one PSCell and two SCells.

Note that the base station apparatus 200 may configure a bandwidth part (BWP) in a cell configured in the terminal apparatus 100 and perform adjustment such that a limited frequency band is used among all frequency bands of the cell. The BWP may include a part of the frequency bands of each cell. In addition, a plurality of (for example, up to four) BWPs may be configured for each cell. The BWP may be configured by an RRC reconfiguration message. In each cell, the BWP to be used may be designated or switched by an RRC reconfiguration message or by using DCI.

### <Reconfiguration with Synchronization>

Reconfiguration with synchronization will be described. Reconfiguration with synchronization indicates a procedure executed in the terminal apparatus 100 by including, in the RRC reconfiguration message (RRCReconfiguration) transmitted from the base station apparatus 200 to the terminal apparatus 100, a parameter (reconfigurationWithSync: hereinafter, referred to as a reconfiguration-with-synchronization parameter in some cases) indicating that reconfiguration with synchronization is performed.

The reconfiguration-with-synchronization parameter is separately included under a parameter (which may be hereinafter referred to as an MCG configuration parameter) for MCG configuration and under a parameter (which may be hereinafter referred to as an SCG configuration parameter) for SCG configuration. That is, the reconfiguration-with-synchronization parameter indicates reconfiguration with synchronization for the MCG when included under the MCG configuration parameter, and indicates reconfiguration with synchronization for the SCG when included under the SCG configuration parameter.

The reconfiguration with synchronization is a procedure in which the terminal apparatus 100 changes an SpCell, and includes operations such as random access to a new SpCell (that is a change destination or a target), MAC reset, and PDCP data recovery (in the case of an AM DRB).

Processing in a case where the reconfiguration-with-synchronization parameter is included under the MCG configuration parameter may be referred to as a handover. In addition, processing in a case where the reconfiguration-with-synchronization parameter is included under the SCG configuration parameter may be referred to as PSCell addition and/or PSCell change. In addition, a PCell/PSCell that is a change source may be referred to as a source PCell/source PSCell, and a PCell/PSCell that is a change destination may be referred to as target PCell/target PSCell. In addition, since the reconfiguration with synchronization may involve CA, the term serving cells may be used to refer to a source serving cell and a target serving cell. In addition, the term serving may be omitted, and the cells may be referred to as a source cell and a target cell.

The terminal apparatus 100 may generate a configuration of the target cell by applying the delta configuration included in the RRC reconfiguration message to a configuration of the source cell.

In addition, the reconfiguration with synchronization may involve changing a security key. In this case, in addition to the above, PDCP re-establishment is performed.

When the security key is changed, a new key is generated by RRC of the terminal apparatus 100, and PDCP is re-established. Thus, the new key is applied to PDCP.

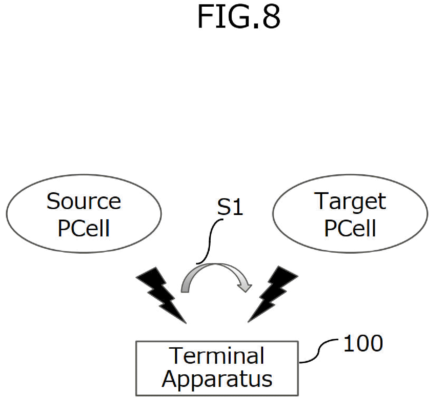

Fig. 8 is a diagram illustrating an example of reconfiguration with synchronization. Note that Fig. 8 is a diagram illustrating an example of processing in a case where the reconfiguration-with-synchronization parameter is included under the MCG configuration parameter. The reconfiguration-with-synchronization parameter includes configurations such as a configuration of the target PCell, a configuration of a new cell radio network temporary identifier (C-RNTI), a RACH configuration, and a configuration of a timer for detecting a handover failure. The terminal apparatus 100 performs random access (RA) in the target PCell according to the configuration, and changes the current source PCell to the target PCell (S1).

### <Random Access in Handover>

The random access in a handover includes contention free random access (CFRA) which is random access without contention, and random access with contention. There is contention-based random access (CBRA), and there are a case where the access is performed in four steps and a case where the access is performed in two steps.

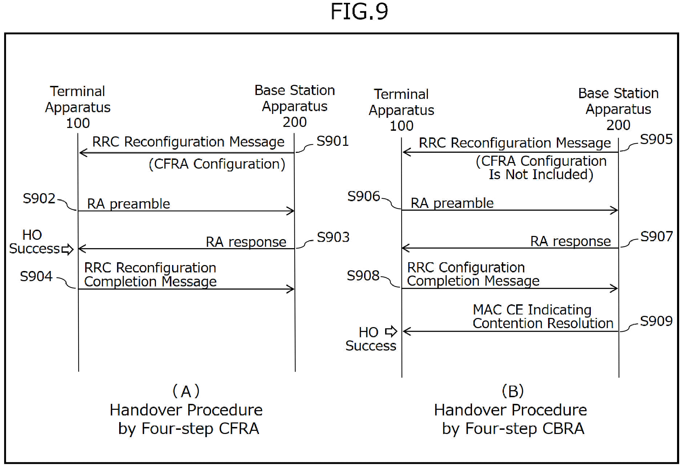

Fig. 9 is a diagram illustrating an example of a handover procedure based on four-step random access. Fig. 9(A) is a diagram illustrating an example of a handover procedure based on four-step CFRA. Fig. 9(B)is a diagram illustrating an example of a handover procedure based on four-step CBRA.

The sequence inFig. 9(A) will be described.

The base station apparatus 200 transmits an RRC reconfiguration message including the reconfiguration-with-synchronization parameter to the terminal apparatus 100 (S901).

In a case where a four-step CFRA configuration is included in the reconfiguration-with-synchronization parameter and there is a reference signal of which reference signal received power (RSRP) is equal to or higher than a threshold value among reference signals designated in the four-step CFRA configuration, the terminal apparatus 100 executes a handover based on the four-step CFRA. Further, in a case where a two-step CFRA configuration is included in the reconfiguration-with-synchronization parameter and there is a reference signal of which RSRP is equal to or higher than a threshold value among reference signals designated in the two-step CFRA configuration, the terminal apparatus 100 executes a handover based on the two-step CFRA. In a case where the reconfiguration-with-synchronization parameter does not include a four-step CFRA configuration and a two-step CFRA configuration, or in a case where a four-step CFRA configuration or a two-step CFRA configuration is included but there is no reference signal of which RSRP is equal to or higher than a threshold value among reference signals designated in the four-step CFRA configuration or the two-step CFRA configuration, the terminal apparatus 100 executes four-step CBRA or two-step CBRA.

The terminal apparatus 100 transmits a random access preamble (RA preamble) to the base station apparatus 200 in the target PCell (S902).

When receiving the random access preamble (S902), the base station apparatus 200 transmits a random access response (RA response) (S903).

In the case of CFRA, contention resolution is not needed because the preamble is included in the CFRA configuration. Therefore, the handover is successful at a timing at which the terminal apparatus 100 receives the random access response in the target PCell.

When receiving the random access response (S903), the terminal apparatus 100 transmits an RRC reconfiguration completion message, which is a response message to the RRC reconfiguration message, to the base station apparatus 200 in the target serving cell (S904).

Next, the sequence in Fig. 9(B) will be described.

The base station apparatus 200 transmits an RRC reconfiguration message including the reconfiguration-with-synchronization parameter to the terminal apparatus 100 (S905). Since the CFRA configuration is not included in the reconfiguration-with-synchronization parameter, the terminal apparatus 100 executes a handover (two-step or four-step) by the CBRA.

The terminal apparatus 100 transmits a random access preamble to the base station apparatus 200 in the target PCell (S906).

When receiving the random access preamble (S906), the base station apparatus 200 transmits a random access response (S907).

In the case of the CBRA, since any random access preamble is used, there is a possibility that the random access preamble may contend with a random access preamble transmitted by another terminal apparatus. Therefore, at a timing at which the terminal apparatus 100 receives the random access response (S907), the handover does not succeed.

When receiving the random access response (S907), the terminal apparatus 100 transmits an RRC reconfiguration completion message to the base station apparatus 200 in the target serving cell (S908).

When receiving the RRC reconfiguration completion message (S908), the base station apparatus 200 transmits a MAC CE indicating the contention resolution to the terminal apparatus 100 in the target serving cell (S909).

In the case of the CBRA, the handover is successful at a timing at which the terminal apparatus 100 receives the MAC CE (S909) indicating the contention resolution.

That is, in the handover by the four-step CFRA, the RRC reconfiguration completion message is transmitted (S904) after the handover succeeds, but in the handover by the four-step CBRA, the RRC reconfiguration completion message is transmitted (S908) before the handover succeeds.

In addition, in a case where the uplink resources allocated in step S907 are sufficiently large, the terminal apparatus 100 can transmit uplink data generated in the DRB in addition to the RRC reconfiguration completion message in step S908. That is, in the handover based on the four-step CBRA, there is a possibility that the uplink data generated in the DRB is transmitted before the handover succeeds.

Note that, in the case of the handover based on the two-step random access, in both the CBRA and the CFRA, the terminal apparatus 100 transmits the RRC reconfiguration completion message in step S904 after transmitting the random access preamble in step S902 and before receiving the random access response in step S903. That is, in the handover based on the two-step random access, in either case of the CFRA or the CBRA, since an RRC configuration completion message is transmitted before the handover succeeds, there is a possibility that the uplink data generated in the DRB is transmitted before the handover succeeds.

In addition, in the handover in E-UTRA, there is a case where a RACH-less handover which is a handover in which random access is not performed is performed. In the RACH-less handover, an RRC reconfiguration completion message is transmitted to the base station apparatus 200 in the target serving cell without performing random access, and the handover is successful at a timing at which a MAC CE indicating contention resolution is received from the base station apparatus 200 in the target serving cell. That is, in the RACH-less handover, since the RRC reconfiguration completion message is transmitted before the handover succeeds, there is a possibility that the uplink data generated in the DRB is transmitted before the handover succeeds.

### <Handover Failure Processing>

In a case where the terminal apparatus 100 that has received the RRC reconfiguration message including the reconfiguration-with-synchronization parameter does not succeed in the handover within a certain time, the handover fails. The fact that the handover does not succeed within a certain time may mean that a timer for handover failure detection started when the RRC reconfiguration message including the reconfiguration-with-synchronization parameter is received expires before the handover succeeds.

In a case where the handover fails, the terminal apparatus 100 returns the configuration to a configuration used in the source PCell and performs an RRC connection reestablishment procedure. When the configuration of the terminal apparatus 100 is returned to the configuration used in the source PCell, a value of a state variable in each entity of each radio bearer is also returned to a value used in the source (the value immediately before the handover processing).

In the RRC connection reestablishment procedure, the terminal apparatus 100 performs cell selection, and transmits an RRC reestablishment request message (RRCReestablishmentRequest) to the base station apparatus 200 in a case where an NR cell is selected. The RRC reestablishment request message is transmitted through SRB0. Since the PDCP entity does not exist in SRB0, security processing using PDCP is not performed on the RRC reestablishment request message. In addition, when an RRC reestablishment message (RRCReestablishment) which is a response message to the RRC reestablishment request message is received from the base station apparatus 200, the security key of the terminal apparatus 200 is updated.

### <Conditional Handover>

The conditional handover (CHO) is a handover (initiatively) executed by the terminal apparatus 100 when one or more handover execution conditions are fulfilled. The terminal apparatus 100 receives an RRC reconfiguration message including conditional reconfiguration parameters from the base station apparatus 200, and stores the conditional reconfiguration parameters. The conditional reconfiguration parameters include one or more pairs of a configuration parameter of a PCell change destination candidate including the reconfiguration-with-synchronization parameter and an execution condition parameter for executing the handover to the PCell change destination candidate. The execution condition parameters include, for example, a parameter related to measurement configuration. When receiving the conditional reconfiguration parameters, the terminal apparatus 100 starts cell measurement, and in a case where any PCell among measured cells fulfills the execution condition, applies the configuration parameter of the PCell change destination candidate of the PCell that fulfills the execution condition, and performs the conditional handover to the PCell. The terminal apparatus 100 releases the conditional reconfiguration parameters after the conditional handover succeeds.

Note that the conditional reconfiguration parameters may include configurations on the SCG side, that is, one or a plurality of pairs of a configuration parameter of the PSCell change destination candidate and an execution condition parameter for executing the change to the PSCell change destination candidate. The terminal apparatus 100 starts measurement of the execution condition when receiving the conditional reconfiguration parameters on the SCG side, and performs a conditional PSCell change (CPC) in a case where the measurement result fulfills the execution condition.

In the conditional handover, a handover failure is detected similarly to an unconditional handover (which may be hereinafter simply referred to as a handover), and processing after the handover failure is performed. In the RRC connection reestablishment procedure after the conditional handover failure or the handover failure, or in the RRC connection reestablishment procedure after the radio link failure, in a case where the selected cell is a PCell change destination candidate, the terminal apparatus 100 can transmit the RRC reconfiguration completion message to attempt the handover instead of transmitting the RRC reestablishment request message to the base station apparatus 200, and recover the RRC connection. Note that, in a case where the cell selected by the terminal apparatus 100 is a PCell change destination candidate, the case where the terminal apparatus 100 can transmit the RRC reconfiguration completion message instead of transmitting the RRC reestablishment request message to the base station apparatus 200 is limited to a case where a conditional reconfiguration attempt parameter (attemptCondReconfig), which is a parameter for permitting the processing, is configured in the terminal apparatus 100.

Note that the conditional handover and the unconditional handover may be referred to as a handover without distinction.

### <AS Security and Key Stream>

AS security processing is performed in a PDCP entity of a radio bearer other than SRB0 by using a security key (a ciphering key or an integrity protection key) generated through RRC. The AS security processing includes ciphering and integrity protection, and is executed by using a ciphering key and an integrity protection key, respectively.

When receiving a PDCP SDU from an upper layer, the PDCP entity of each radio bearer performs the AS security processing on the received PDCP SDU by using an input called a key stream. The key stream includes four elements, for example, KEY, COUNT, BEARER, and DIRECTION.

KEY indicates, for example, a security key.

COUNT is one of state variables of the PDCP entity, and indicates, for example, a sequence number. A COUNT value is incremented by one each time PDCP PDU is passed to a lower layer, with an initial value being '0'. The maximum value of the COUNT value is, for example, a value obtained by subtracting 1 from 2³², that is, '4294967295'.

BEARER indicates, for example, a value of a radio bearer identifier. DIRECTION indicates uplink or downlink, and is '0' in the case of uplink and '1' in the case of downlink.

In the AS security, the key stream is prohibited from being reused from the viewpoint of security. For example, in the terminal apparatus 100, in a case where data is transmitted from a certain radio bearer, unless the security key is updated, it is prohibited to perform the AS security processing by using the COUNT value used in the past in this radio bearer.

Note that the definition of the term "key stream" may be somewhat different depending on the specifications. In the present embodiment, the key stream will be described as four elements, KEY, COUNT, BEARER, and DIRECTION.

### [Embodiments]

Hereinafter, each embodiment will be described.

### <L1/L2 Triggered Mobility>

An example of an outline of L1/L2 triggered mobility (LTM) which is currently being developed as a specification will be described.

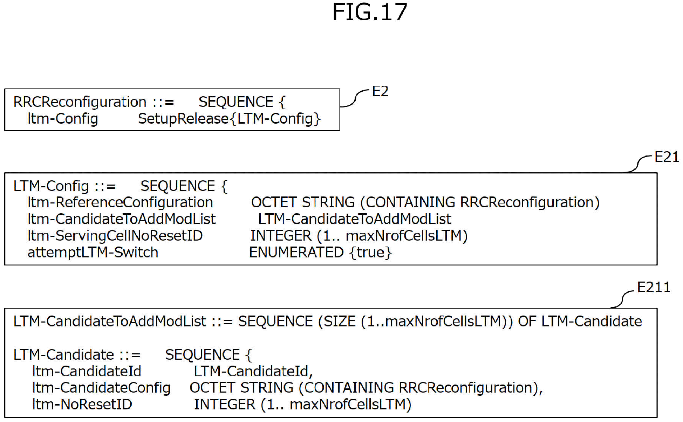

Fig. 17 is a diagram illustrating an example of parameters related to the LTM and included in the RRCReconfiguration message. Note that, in Fig. 17, the parameters described in Fig. 6 are not illustrated. In addition, parameters other than the parameter examples illustrated in Fig. 17 may be included in the RRCReconfiguration message. In addition, the name of the parameter is an example, and other names may be used.

A format E2 relates to a parameter of RRCReconfiguration. RRCReconfiguration includes ltm-Config indicating an LTM configuration. ltm-Config means that the LTM configuration is newly set or changed in a case where LTM-Config is included in SetupRelease, and the LTM configuration is released in a case where nothing is included in SetupRelease.

A format E21 relates to parameters included in the LTM configuration. ltm-ReferenceConfiguration is a reference configuration that will be described later. ltm-CandidateToAddModList is a list of configurations of cell change destination candidates. That is, ltm-CandidateToAddModList includes one or a plurality of configurations of cell change destination candidates. ltm-ServingCellNoResetID is an identifier used when the terminal apparatus 100 determines whether or not L2 reset (Layer2 reset) is needed when performing cell switching that will be described later. An initial value of ltm-ServingCellNoResetID or ltm-ServingCellNoResetID may be a group identifier of a serving cell used when the base station apparatus 200 transmits the RRC reconfiguration message including a configuration of the cell change destination candidate to the terminal apparatus 100 in step S1001 that will be described later. ltm-ServingCellNoResetID may be stored in the terminal apparatus 100 as a variable indicating a group identifier of the current serving cell. In addition, ltm-ServingCellNoResetID is a parameter that is needed to be present in a case where a new LTM configuration is configured, and is not present in other cases. attemptLTM-Switch is a parameter having the same meaning as the conditional reconfiguration attempt parameter (attemptCondReconfig) in the conditional handover, and is a parameter that permits RRC connection recovery after the cell switching failure, the handover failure, or the radio link failure.

A format E211 relates to parameters included in a configuration of a cell change destination candidate. LTM-Candidate is a configuration of a cell change destination candidate. ltm-CandidateId is an identifier or an index that uniquely identifies configurations of one or a plurality of set cell change destination candidates in the terminal apparatus 100. ltm-CandidateConfig is a parameter for generating a configuration used in a cell switching destination (target). ltm-CandidateConfig may be a complete configuration as will be described later, or may be a delta configuration. ltm-CandidateConfig may be configured by parameters included in an RRC reconfiguration message. ltm-NoResetID is an identifier used when the terminal apparatus 100 determines whether L2 reset (Layer2 reset) is needed at the time of cell switching that will be described later. ltm-NoResetID may be a group identifier of cells that are cell change destination candidates.

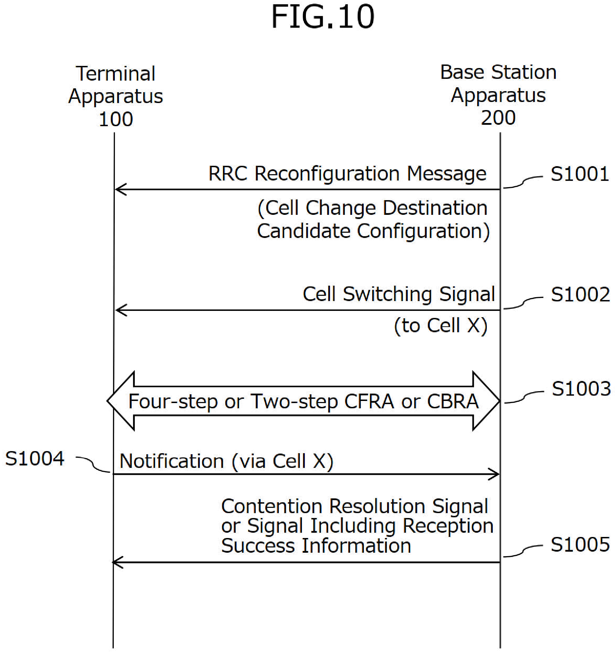

Fig. 10 is a diagram illustrating an example of a sequence of LTM.

The base station apparatus 200 includes, in the RRC reconfiguration message, configurations of one or a plurality of cell change destination candidates (configurations of target cell candidates), and transmits the RRC reconfiguration message to the terminal apparatus 100 (S1001).

When receiving the RRC reconfiguration message (S1001), the terminal apparatus 100 stores information related to LTM configurations (including the configurations of the cell change destination candidates) included in the received message. In addition, the terminal apparatus 100 may store a value of ltm-ServingCellNoResetID included in the LTM configurations in a variable indicating a group identifier of the current serving cell.

Note that the cell change destination candidate may be, for example, only a PCell or may include an SCell. A configuration of each cell change destination candidate only needs to be able to be uniquely specified in the terminal apparatus 100 by using the index (ltm-CandidateId). In addition, the configuration of the cell change destination candidate does not need to include a parameter indicating update of the security key. That is, the security key based on the LTM does not need to be updated. In addition, the configuration of the cell change destination candidate may include a parameter similar to the reconfiguration-with-synchronization parameter.

Note that the terminal apparatus 100 may retain the configuration of the cell change destination candidate received and stored in step S1001 without releasing the configuration after the cell switching succeeds as will be described later. In this case, the retained configuration of the cell change destination candidate may be used for subsequent sell switching. However, in a case where the configuration of the cell change destination candidate is retained and used for subsequent cell switching, there is a case where it is difficult to set the configuration of the cell change destination candidate as a delta configuration, and apply the delta configuration to a source configuration to generate a configuration of the target cell. This event occurs due to a difference in source configuration depending on the order of cells changed through cell switching.

Therefore, in step S1001, the RRC reconfiguration message may include a reference configuration in addition to the configuration of the cell change destination candidate or as a part of the configuration of the cell change destination candidate. The reference configuration is used, for example, to complete the configuration used in the cell switching destination (target). In a case where the reference configuration is included in the RRC reconfiguration message, the configuration of each cell change destination candidate included in the RRC reconfiguration message may be a configuration (delta configuration) of a difference from the reference configuration. That is, the terminal apparatus 100 can generate the configuration used in the cell switching destination (target), that is, the complete configuration used in the cell switching destination, from the reference configuration and the configuration of the cell change destination candidate (delta configuration). For example, when receiving a signal for cell switching to a cell X that is the cell change destination candidate from the base station apparatus 200 in step S1002 that will be described later, the terminal apparatus 100 generates a configuration to be used in the cell X by applying the configuration of the cell X to the reference configuration.

In addition, in step S1001, the RRC reconfiguration message does not include the reference configuration in some cases. In a case where the reference configuration is not included in the RRC reconfiguration message, the configuration of each cell change destination candidate included in the RRC reconfiguration message is, for example, a complete configuration. That is, the terminal apparatus 100 can generate a configuration used in the cell switching destination (target) by replacing the configuration used in the current cell with the configuration of the cell change destination candidate. For example, when receiving a signal for cell switching to the cell X that is the cell change destination candidate from the base station apparatus 200 in step S1002 that will be described later, the terminal apparatus 100 generates a configuration to be used in the cell X by replacing the current configuration of the cell with the configuration of the cell X. However, in a case where the configuration of the cell change destination candidate is configured as a complete configuration, some configurations need not be included. Some configurations include, for example, configurations that are not changed due to cell switching (fixed configurations). The configurations (fixed configurations) that are not changed due to cell switching include, for example, at least one of radio bearer configurations. In this case, when receiving a signal for cell switching to the cell X that is the cell change destination candidate from the base station apparatus 200, the terminal apparatus 100 generates a configuration used in the cell X by replacing the current configuration of the cell with the configuration of the cell X except for the fixed configurations.

Note that the terminal apparatus 100 need not return some or all of values of a state variable, a timer, and the like used in each entity (an SDAP entity, a PDCP entity, an RLC entity, a MAC entity, or the like) to initial states when generating the configuration used in the cell switching destination regardless of whether the reference configuration is included or not in the RRC reconfiguration message. In addition, the terminal apparatus 100 does not need to discard some or all of buffers in each entity. That is, the terminal apparatus 100 can retain some or all of values of a state variable, a timer, and the like used by each entity. In addition, the terminal apparatus 100 may retain some or all of the buffers in each entity.

The base station apparatus 200 transmits, to the terminal apparatus 100, a cell switching signal for switching the serving cell of the terminal apparatus 100 from the current serving cell to one of the cell change destination candidates (S1002).

The terminal apparatus 100 receives the cell switching signal in the current serving cell (S1002). For example, a MAC CE is used as the cell switching signal. In addition, a physical layer signal such as DCI may be used as the cell switching signal.

The cell switching signal includes at least an index (ltm-CandidateId). The terminal apparatus 100 applies a configuration of the cell change destination (referred to as a cell X) designated by the received cell switching signal. Note that the cell X may include only the PCell, may include only the PSCell, or may include the PCell or the PSCell and one or a plurality of SCells.

The terminal apparatus 100 performs four-step or two-step CFRA or CBRA with the base station apparatus 200 in the cell X according to the configuration of the cell X (S1003). In addition, for example, in a case where a parameter indicating that RACH-less cell switching is to be performed is included in the configuration of the cell X, or in a case where early TA acquisition that will be described later is performed, the random access processing in step S1003 is not executed. In addition, in a case where ltm-NoResetID of the cell X is the same as ltm-ServingCellNoResetID or a variable indicating a group identifier of the current serving cell, the terminal apparatus 100 does not perform L2 reset. In addition, in a case where ltm-NoResetID of the cell X is not the same as ltm-ServingCellNoResetID or the variable indicating the group identifier of the current serving cell, the terminal apparatus 100 performs the L2 reset and overwrites ltm-ServingCellNoResetID or the variable indicating the group identifier of the current serving cell with ltm-NoResetID of the cell X. The L2 reset is, for example, RLC reestablishment. In addition, the L2 reset is, for example, PDCP data recovery.

The terminal apparatus 100 transmits a notification indicating that the cell has been switched to the base station apparatus 200 in the cell X (S1004). The notification corresponds to an RRC reconfiguration completion message in the handover or the conditional handover. For the notification indicating that the cell has been switched, an RRC message such as an RRC reconfiguration completion message may be used, or a MAC CE may be used. In addition, a physical signal such as UCI may be used for the notification indicating that the cell has been switched.

In addition, the notification indicating that the cell has been switched may include at least an identifier in the cell X of the terminal apparatus 100. Note that, in a case where two-step CFRA or CFRA is performed in step S1003, the notification indicating that the cell has been switched is transmitted before receiving the random access response in step S1003. In addition, the uplink data generated in the DRB may be transmitted together with the notification indicating that the cell has been switched.

In a case where four-step or two-step CBRA is performed in step S1003 or in a case where RACH-less cell switching is performed, the base station apparatus 200 transmits, to the terminal apparatus 100, the contention resolution signal or a signal including information (hereinafter, may be referred to as reception success information) indicating that the notification transmitted from the terminal apparatus 100 in step S1004 is successfully received (S1005).

For example, the terminal apparatus 100 receives the contention resolution signal or the signal including the reception success information in the cell X (S1005). The contention resolution signal or the reception success information may include at least an identifier of the cell X of the terminal apparatus 100.

A timing at which the cell switching is successful may be similar to the handover success in the handover or the conditional handover. That is, in the case of the cell switching using the four-step or two-step CFRA, the cell switching is successful at a timing at which a random access response is received. In addition, in the case of the cell switching using the four-step or two-step CBRA or RACH-less cell switching, the cell switching is successful at a timing at which the processing in step S1005 is performed. In a case where the timing at which the cell switching is successful is similar to the handover success in the handover or the conditional handover, similarly to the handover or the handover in the conditional handover, in the cell switching using the four-step CFRA, a notification indicating that the cell has been switched or uplink data generated in the DRB is not transmitted before the cell switching succeeds. However, in the case of the cell switching using the four-step CBRA, the cell switching using the two-step CFRA or CBRA, and the RACH-less cell switching, a notification indicating that the cell has been switched is transmitted before the cell switching succeeds. Further, the uplink data generated in the DRB may be transmitted together with the notification indicating that the cell has been switched.

Note that the terminal apparatus 100 may perform downlink synchronization and/or uplink synchronization with one or a plurality of cell change destination candidates before the cell switching signal is transmitted in step S1002 after step S1001 is executed. The base station apparatus 200 may measure timing advance (TA) of one or a plurality of cell change destination candidates of the terminal apparatus 100 in the uplink synchronization. The uplink synchronization may be performed by the base station apparatus 200 instructing the terminal apparatus 100 to transmit a random access preamble. The base station apparatus 200 may instruct the terminal apparatus 100 to transmit different random access preambles for one or a plurality of cell change destination candidates, or may instruct the terminal apparatus 100 to transmit a random access preamble common to a plurality of cell change destination candidate groups. The TA measured by the base station apparatus 200 may be transmitted to the terminal apparatus 100 by using a random access response (RAR), or may be transmitted to the terminal apparatus 100 by using a cell switching signal in step S1002. As described above, performing uplink synchronization after the terminal apparatus 100 executes step S1001 and before the cell switching signal is transmitted in step S1002 may be referred to as early TA measurement or early TA acquisition.

Note that the cell switching may be rephrased to as LTM or LTM cell switching. In addition, the cell switching may be rephrased as another term indicating cell switching based on LTM. Hereinafter, the cell switching and the cell change may be treated as terms indicating the same operation.

In addition, in the present embodiment, the cell switching is cell switching of the MCG unless it is particularly distinguished whether the cell switching is cell switching of the MCG or cell switching of the SCG.

Note that, in the configuration of the cell change destination candidate of the MCG in the LTM configuration, the reconfiguration-with-synchronization parameter may be included under the MCG configuration parameter. In addition, similarly, in the configuration of the cell change destination candidate of the SCG in the LTM configuration, the reconfiguration-with-synchronization parameter may be included under the SCG configuration parameter. Therefore, the cell switching of the MCG may be rephrased to as handover. In addition, the cell switching of the SCG may be rephrased to as PSCell change.

### <Cell Switching Failure Processing>

In a case where the cell switching fails, the RRC connection reestablishment procedure may be performed similarly to the handover failure processing or the conditional handover failure processing.

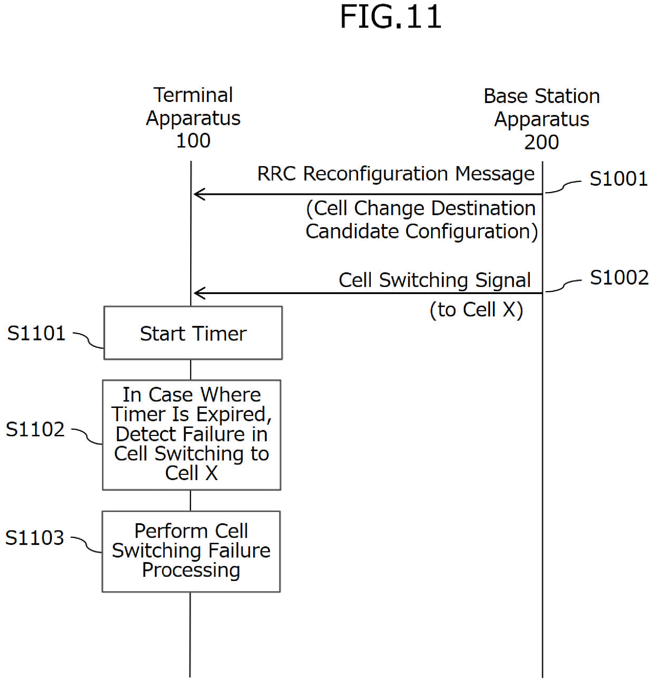

Fig. 11 is a diagram illustrating an example of a sequence of cell switching failure detection and cell switching failure processing. Since the processing of step 1001 and step 1002 in Fig. 11 is similar to the processing of step 1001 and step 1002 in Fig. 10, a description thereof is omitted.

When receiving the cell switching signal (S1002), the terminal apparatus 100 starts a timer for detecting a cell switching failure (S1101), and starts cell switching processing to a cell (referred to as a cell X) designated by the received cell switching signal (not illustrated).

In a case where the cell switching succeeds before the timer expires, the terminal apparatus 100 stops the timer (not illustrated). On the other hand, in a case where the timer expires, the terminal apparatus 100 detects failure in cell switching to the cell X (S1102).

When detecting the cell switching failure (S1102), the terminal apparatus 100 performs cell switching failure processing (S1103). In the cell switching failure processing, the terminal apparatus 100 may return the configuration of the terminal apparatus 100 to the configuration used in the source PCell and perform the RRC connection reestablishment procedure. Note that a part or all of the cell switching failure processing is an example of first processing.

### <Key Stream Reuse Problem in Cell Switching Failure Processing>

In the LTM, in the RRC connection reestablishment procedure in the cell switching failure processing or the RRC connection reestablishment procedure after a radio link failure on the MCG side, in a case where a selected cell is one of the cell change destination candidates, it is considered to recover the RRC connection in the same way as in the case of the conditional handover, that is, to switch the cell to the selected cell instead of transmitting the RRC reestablishment request message in the selected cell.

However, in a case where a selected cell is one of the cell change destination candidates in the RRC connection reestablishment procedure after the failure of the cell switching using the four-step CBRA, the failure of the cell switching using the two-step CFRA or CBRA, or the failure of the RACH-less cell switching, the processing of switching the cell to the selected cell instead of transmitting the RRC reestablishment request message in the selected cell may cause a key stream reuse problem.

As described above, in the cell switching using the four-step CBRA, the cell switching using the two-step CFRA or CBRA, and the RACH-less cell switching, the uplink data may be transmitted together with the notification indicating that the cell has been switched before the cell switching succeeds. In a case where the notification indicating that the cell has been switched is an RRC message transmitted from an SRB (for example, SRB1) other than SRB0, processing including the security processing is performed in the PDCP entity of SRB1, and the RRC message is transmitted as PDCP data PDU through a lower layer. It is assumed that a COUNT value used for the security processing in the PDCP entity of the RRC message is, for example, n.

In addition, in a case where uplink data is transmitted from a certain DRB (referred to as a DRB 1) together with a notification indicating that the cell has been switched, the PDCP entity of the DRB 1 performs processing including security processing on the uplink data, and the uplink data is transmitted as PDCP data PDU through a lower layer. It is assumed that a COUNT value used for the security processing (in the PDCP entity of the uplink data) of the uplink data is, for example, m.

In a case where the cell switching fails, the terminal apparatus 100 returns the configuration of the terminal apparatus 100 to the configuration used in the source PCell and performs the RRC connection reestablishment procedure. When the configuration of the terminal apparatus 100 is returned to the configuration used in the source PCell, the value of the state variable in each entity of each radio bearer is also returned to the value used in the source, so that the COUNT value returns to the state before the cell switching signal is received. In the RRC connection reestablishment procedure, in a case where a selected cell is one of the cell change destination candidates and cell switching is performed to the selected cell, the terminal apparatus 100 transmits an RRC message which is a notification indicating that the cell has been switched in the cell. When the RRC message is transmitted, n is used again as the COUNT value in the security processing in the PDCP entity of SRB1. In addition, when the first uplink message is transmitted from the DRB 1 in the cell, m is used again as the COUNT value in the security processing in the PDCP entity of the DRB 1. In the cell switching in the LTM, the security key is not changed, and the same security key and the same COUNT value are used for the same direction (uplink) of the same radio bearer. That is, a key stream reuse problem may occur.

### <Cell Switching Failure Processing 1 for Avoiding Key Stream Reuse Problem>

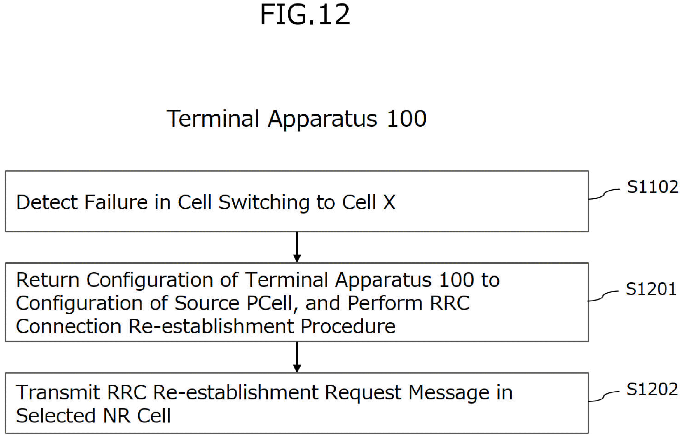

Fig. 12 is a diagram illustrating an example of a first cell switching failure processing method. The first cell switching failure processing method is a method of, in a case where a cell selected by the terminal apparatus 100 is an NR cell in the RRC connection reestablishment procedure after a cell switching failure, after a handover failure, or after a handover failure to a different RAT, transmitting the RRC reestablishment request message to the base station apparatus 200 in the selected NR cell regardless of whether or not the NR cell is one of the cell change destination candidates.

Note that handover to a different RAT may be rephrased to as mobility from the NR.

The terminal apparatus 100 detects a failure in cell switching to the cell X, a handover failure, or a failure in handover to a different RAT (S1102).

Next, the terminal apparatus 100 returns the configuration of the terminal apparatus 100 to the configuration used in the source PCell and performs the RRC connection reestablishment procedure (S1201). When the configuration of the terminal apparatus 100 is returned to the configuration used in the source PCell, the terminal apparatus 100 also returns the value of the state variable in each entity of each radio bearer to the value (a value when the cell switching signal is received in step S1002 in Fig. 11 or a value immediately before the reception) used in the source. Note that the terminal apparatus 100 may release the stored configuration of the cell change destination candidate when performing the RRC connection reestablishment procedure. In a case where the stored configuration of the cell change destination candidate is released, the release processing may be performed before processing in step S1202 that will be described later.

In the RRC connection reestablishment procedure, the terminal apparatus 100 performs cell selection and selects, for example, an NR cell. The terminal apparatus 100 transmits the RRC reestablishment request message to the base station apparatus 200 in the selected NR cell (S1202).

Note that, in the RRC connection reestablishment procedure, in a case where the selected cell is a RAT other than NR, the terminal apparatus 100 transitions to the RRC idle mode. In addition, in a case where a cell is unable to be selected within a certain time, the terminal apparatus 100 transitions to the RRC idle mode.

Note that, in the case of the RRC connection reestablishment procedure after the handover failure, in a case where the cell selected by the terminal apparatus 100 is an NR cell, the selected NR cell is a cell fulfilling the second condition, and the first parameter is configured in the terminal apparatus 100, when the handover before the failure is a handover that involves security key update, the terminal apparatus 100 may perform the cell switching on the selected cell, and when the handover before the failure is a handover that does not involve security key update, the terminal apparatus 100 may transmit the RRC reestablishment request message to the base station apparatus 200 in the selected NR cell. Note that the handover failure may be rephrased to as a cell switching failure. Note that processing in a case where the handover is a handover that involves security key update and processing in a case where the handover is a handover that does not involve security key update are an example of first processing.

In addition, in the case of the RRC connection reestablishment procedure after a radio link failure, in a case where the cell selected by the terminal apparatus 100 is an NR cell, the NR cell is a cell fulfilling the second condition, and the first parameter is configured in the terminal apparatus 100, the terminal apparatus 100 may perform the cell switching on the selected cell.

In addition, in the case of the RRC connection reestablishment procedure after a failure in handover to a different RAT, in a case where the cell selected by the terminal apparatus 100 is an NR cell, the NR cell is a cell fulfilling the second condition, and the first parameter is configured in the terminal apparatus 100, the terminal apparatus 100 may perform the cell switching on the selected cell.

Further, in the case of the RRC connection reestablishment procedure after a failure in handover to a different RAT, in a case where the cell selected by the terminal apparatus 100 is an NR cell, the selected NR cell is a cell fulfilling the second condition, and the first parameter is configured in the terminal apparatus 100, when the handover to a different RAT before the failure is a handover to a different RAT that involves security key update, the terminal apparatus 100 may perform the cell switching on the selected cell, and when the handover to a different RAT before the failure is a handover to a different RAT that does not involve security key update, the terminal apparatus 100 may transmit the RRC reestablishment request message to the base station apparatus 200 in the selected NR cell.

The first parameter is, for example, a parameter indicating that recovery of the RRC connection is performed in the RRC connection reestablishment procedure after the cell switching fails and/or after the handover fails and/or after the handover to a different RAT fails and/or after the radio link fails. Note that the first parameter is, for example, an example of a parameter related to recovery of the RRC connection.

Performing recovery of the RRC connection means, for example, performing, in the RRC connection reestablishment procedure after the cell switching failure, and/or after the handover failure, and/or after the failure in handover to a different RAT, and/or after the radio link failure, the cell switching processing on the selected cell in a case where the selected cell is one of cells fulfilling a second condition.

In addition, performing recovery of the RRC connection means, for example, in the RRC connection reestablishment procedure after the cell switching failure, and/or after the handover failure, and/or after the failure in handover to a different RAT, and/or after the radio link failure, in a case where the selected cell is one of the cells fulfilling the second condition and is the first cell selection after the cell switching failure detection in step S1102 or after the handover failure, after the failure in handover to a different RAT, or after the radio link failure, performing the cell switching processing on the cell.

The second condition includes, for example, that the cell is a cell change destination candidate stored in the terminal apparatus 100. In addition, the second condition includes, for example, that the cell is a cell in which recovery of the RRC connection after the cell switching failure is permitted. Note that the second condition may be described as a second condition related to cell switching.

The cell permitted to recover the RRC connection after the cell switching failure includes, for example, a cell which is a cell change destination candidate stored in the terminal apparatus 100 and belongs to the same group as a cell (for example, the cell X) in which the cell switching fails. The determination as to whether the cell belongs to the same group as the cell X is performed by using, for example, a group identifier set in advance in the configuration of the cell change destination candidate. The group identifier may be rephrased to as a reset-unneeded identifier.

In addition, the cell permitted to recover the RRC connection after the cell switching failure includes, for example, a cell that is a cell change destination candidate stored in the terminal apparatus 100 and includes information indicating that recovery of the RRC connection after the cell switching failure is permitted in the configuration of the cell change destination candidate.

Further, a cell in which recovery of the RRC connection after the cell switching failure is permitted includes, for example, a cell change destination candidate stored by the terminal apparatus 100, and also a cell selected in the first cell selection after the cell switching failure detection in step S1102, or after the handover failure, or after the failure in handover to a different RAT, or after the radio link failure.

In addition, the first parameter is, for example, an attemptLTM-Switch parameter.

### <Cell Switching Failure Processing 2 for Avoiding Key Stream Reuse Problem>

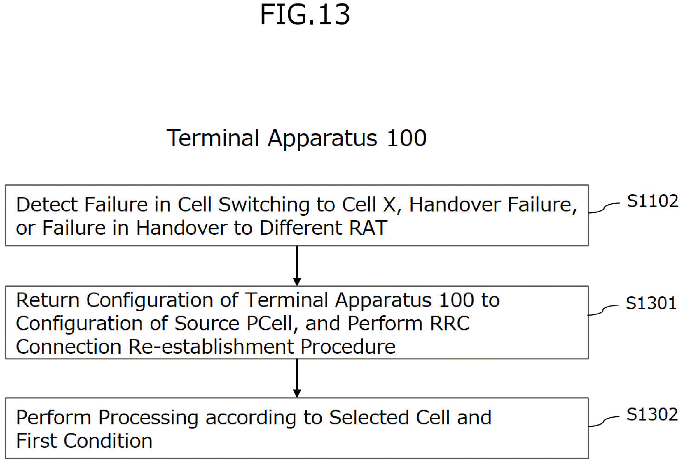

Fig. 13 is a diagram illustrating an example of a second cell switching failure processing method. The second cell switching failure processing method is a method of performing processing of switching the cell to a selected cell by applying the configuration of the cell change destination candidate of the selected cell in a case where the cell selected by the terminal apparatus 100 is one of cells fulfilling a second condition and fulfills at least a first condition in the RRC connection reestablishment procedure in the cell switching failure processing.

Note that, in a case where the cell selected by the terminal apparatus 100 described above is one of the cells fulfilling the second condition and fulfills at least the first condition related to the cell switching, the processing of applying the configuration of the cell change destination candidate of the selected cell and performing the processing of switching the cell to the selected cell may be performed, for example, in a case where at least the first parameter is configured in the terminal apparatus 100.

The terminal apparatus 100 detects a failure in cell switching to the cell X (S1102).

Next, the terminal apparatus 100 returns the configuration of the terminal apparatus 100 to the configuration used in the source PCell and performs the RRC connection reestablishment procedure (S1301). When the configuration of the terminal apparatus 100 is returned to the configuration used in the source PCell, the terminal apparatus 100 also returns the value of the state variable in each entity of each radio bearer to the value (a value at the time of receiving the cell switching signal in step S1002 in Fig. 11 or a value immediately before the reception) used in the source.

In the RRC connection reestablishment procedure, the terminal apparatus 100 performs cell selection and performs processing according to the selected cell and the first condition (S1302).

The first condition is, for example, that the cell switching processing based on four-step CFRA has been performed at the time of the processing of switching the cell to the cell X after receiving the cell switching signal in step S1002 in Fig. 11, that is, the configuration of the cell change destination candidate for the cell X includes the four-step CFRA configuration.

In addition, the first condition may be, for example, that only the cell switching processing based on four-step CFRA has been performed at the time of the processing of switching the cell to the cell X after receiving the cell switching signal in step S1002 in Fig. 11, that is, the configuration of the cell change destination candidate for the cell X includes the four-step CFRA configuration, and there is a reference signal of which RSRP is equal to or higher than a threshold value in the first random access resource selection.

In addition, the first condition may be, for example, that the cell switching processing based on the four-step CFRA has been performed at the time of the processing of switching the cell to the cell X after receiving the cell switching signal in step S1002 in Fig. 11, that is, the configuration of the cell change destination candidate for the cell X may include the four-step CFRA configuration, and first cell selection may be performed after the cell switching failure detection in step S1102.

In addition, the first condition may be, for example, that only the cell switching processing based on the four-step CFRA has been performed at the time of the processing of switching the cell to the cell X after receiving the cell switching signal in step S1002 in Fig. 11, that is, the configuration of the cell change destination candidate for the cell X includes the four-step CFRA configuration, there is a reference signal of which RSRP is equal to or higher than a threshold value in the first random access resource selection, and the first cell selection is performed after the cell switching failure is detected in step S1102.

Note that the fact that only the cell switching processing based on the four-step CFRA has been performed may be rephrased as that the cell switching processing based on the four-step CFRA has been performed and the MAC PDU of the Msg3 (message 3) buffer has not been transmitted. In addition, the fact that only the cell switching processing based on the four-step CFRA has been performed may be rephrased as words indicating that the four-step or two-step CBRA is not performed before the cell switching processing based on the four-step CFRA.

The first condition may be, for example, that PDCP data PDU is not transmitted from the terminal apparatus 100 through a lower layer after receiving the cell switching signal in step S1002 of Fig. 11 and before the cell switching failure is detected in step S1102, that is, that the RRC message is not transmitted from an SRB other than SRB0, and/or that the uplink data is not transmitted from the DRB.

The first condition may be, for example, that PDCP data PDU is not transmitted from the terminal apparatus 100 through the lower layer, that is, the RRC message is not transmitted from the SRB other than SRB0 and/or the uplink data is not transmitted from the DRB after the cell switching signal is received in step S1002 in Fig. 11 and before the cell switching failure is detected in step S1102, and the first cell selection is performed after the cell switching failure is detected in step S1102.

The first condition may be, for example, that only the first signal is transmitted from the terminal apparatus 100 after receiving the cell switching signal in step S1002 in Fig. 11 and before the cell switching failure is detected in step S1102.

The first condition may be, for example, that only a first signal is transmitted from the terminal apparatus 100 after receiving the cell switching signal in step S1002 in Fig. 11 and before the cell switching failure is detected in step S1102, and the first cell selection is performed after the cell switching failure is detected in step S1102.

The first signal is the notification transmitted in step S1004 in Fig. 10. The first signal may be, for example, a MAC CE. In addition, the first signal may be a signal of a physical layer.

In addition, transmitting only the first signal from the terminal apparatus 100 may mean that the MAC SDU is not transmitted from the terminal apparatus 100.

In the RRC connection reestablishment procedure, the terminal apparatus 100 performs cell selection. The terminal apparatus 100 selects an NR cell, and in a case where NR cell is one (for example, a cell Y) of the cells fulfilling the second condition and fulfills the first condition, applies the configuration of the cell change destination candidate for the cell Y, and performs the processing of switching the cell to the cell Y. Note that the processing of switching the cell to the cell Y may be performed only in a case where a first parameter is configured in the terminal apparatus 100. For example, in a case where a cell selected in the cell switching failure processing is one of the cells fulfilling the second condition and fulfills the first condition, the first parameter may be a parameter indicating that the cell switching processing is performed on this cell.

In addition, in the RRC connection reestablishment procedure, in a case where the selected cell is an NR cell and fulfills at least one of the following conditions A to D, the terminal apparatus 100 transmits the RRC reestablishment request message to the base station apparatus 200 in the selected cell. In this case, the terminal apparatus 100 may release the stored configuration of the cell change destination candidate before transmitting the RRC reestablishment request message to the base station apparatus 200.

Condition A: The selected cell is not one of cells fulfilling the second condition.

Condition B: The first condition is not fulfilled.

Condition C: The first parameter is not configured.

Condition D: In the RRC connection reestablishment procedure after a handover failure or after a failure in handover to a different RAT, the handover before the failure or the handover to the different RAT is a handover or a handover to a different RAT that does not involve security key change. Note that the handover failure may be rephrased to as a cell switching failure.

In addition, in the RRC connection reestablishment procedure, the terminal apparatus 100 transitions to the RRC idle mode in a case where the selected cell is a cell of a RAT other than NR or in a case where cell selection is unable to be performed within a predetermined time.

Note that the terminal apparatus 100 may be configured or designed not to transmit PDCP data PDU (which may be hereinafter referred to as a transmission prohibition configuration) until a cell switching failure is detected in step S1102 after receiving the cell switching signal in step S1002 in Fig. 11. The transmission prohibition configuration is, for example, a configuration or a design to use only the four-step CFRA for random access in the cell switching processing. In addition, the configuration or the design to use only the four-step CFRA for random access in the cell switching processing indicates that the four-step CFRA configuration is included in the configuration of each cell change destination candidate.

In addition, the transmission prohibition configuration is, for example, that the MAC CE or physical layer signaling is used for the notification in step S1004 in Fig. 10, and the uplink data generated in the DRB or the like is not transmitted in step S1004. Not transmitting the uplink data generated in the DRB or the like indicates, for example, not transmitting the MAC SDU.

In a case where the transmission prohibition configuration is configured, the terminal apparatus 100 performs the processing in step S1302 as follows.

In the RRC connection reestablishment procedure, the terminal apparatus 100 performs cell selection. In a case where the selected cell is an NR cell and is one (for example, a cell Y) of cells fulfilling the second condition, the terminal apparatus 100 applies the configuration of the cell change destination candidate for the cell Y and performs the processing of switching the cell to the cell Y. Note that the processing of switching the cell to the cell Y may be performed only in a case where a first parameter is configured in the terminal apparatus 100.

In addition, when the transmission prohibition configuration is configured, in a case where the cell selected by the terminal apparatus 100 is an NR cell and one or both of the following conditions E to G are fulfilled in the RRC connection reestablishment procedure, the terminal apparatus 100 transmits the RRC reestablishment request message to the base station apparatus 200 in the selected cell. In this case, the terminal apparatus 100 releases the stored configuration of the cell change destination candidate before transmitting the RRC reestablishment request message to the base station apparatus 200.

Condition E: The selected cell is not one of the cells fulfilling the second condition.

Condition F: The first parameter is not configured.

Condition G: In the RRC connection reestablishment procedure after a handover failure or after a failure in handover to a different RAT, the handover before the failure or the handover to the different RAT is a handover or a handover to a different RAT that does not involve security key change. Note that the handover failure may be rephrased to as a cell switching failure.

In addition, in the RRC connection reestablishment procedure, the terminal apparatus 100 transitions to the RRC idle mode in a case where the selected cell is a cell of a RAT other than NR or in a case where cell selection is unable to be performed within a predetermined time.

### <Cell Switching Failure Processing 3 for Avoiding Key Stream Reuse Problem>

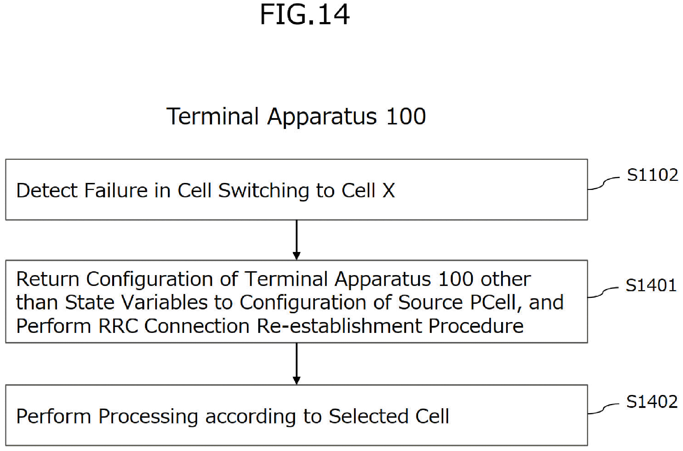

Fig. 14 is a diagram illustrating an example of a third cell switching failure processing method. The third cell switching failure processing method is processing in which, when the terminal apparatus 100 returns the configuration of the terminal apparatus 100 to the configuration used in the source PCell after detecting the cell switching failure, some or all of the values of the state variables are retained, and in a case where the cell selected by the terminal apparatus 100 is an NR cell and is one of cells fulfilling the second condition in the RRC connection reestablishment procedure, the configuration of the cell change destination candidate of the selected cell is applied, and the processing of switching the cell to the selected cell is performed. Note that, when the terminal apparatus 100 returns the configuration of the terminal apparatus 100 to the configuration used in the source PCell after the cell switching failure detection described above, the processing of retaining some or all of the values of the state variables is performed, for example, in a case where at least the first parameter is configured in the terminal apparatus 100. In addition, in the RRC connection reestablishment procedure, in a case where the cell selected by the terminal apparatus 100 is one of the cells fulfilling the second condition, the processing of applying the configuration of the cell change destination candidate of the selected cell and switching the cell to the selected cell is performed, for example, in a case where at least the first parameter is configured in the terminal apparatus 100. Note that, in a case where the RRC reestablishment request message is transmitted to the base station apparatus 200 in the selected cell, the terminal apparatus 100 returns the retained state variable to the configuration used in the source PCell before transmitting the RRC reestablishment request message.

The terminal apparatus 100 detects a failure in cell switching to the cell X (S1102).

Next, the terminal apparatus 100 returns the configuration of the terminal apparatus 100 that is other than the state variables to the configuration used in the source PCell, and performs the RRC connection reestablishment procedure (S1401). For example, in a case where at least a third condition is fulfilled, when the configuration of the terminal apparatus is returned to the configuration used in the source PCell, the terminal apparatus 100 retains some or all of the values of the state variables of the entities of the radio bearer configured in the terminal apparatus 100 without returning values of the state variables to values (values when receiving the cell switching signal in step S1002 of Fig. 11 or values immediately before the reception) used in the source PCell. The retained state variables include, for example, a COUNT value in the PDCP entity. Further, in a case where the third condition is not fulfilled, when the configuration of the terminal apparatus 100 is returned to the configuration used in the source PCell, the terminal apparatus 100 also returns the value of the state variable in each entity of each radio bearer to the value (a value when receiving the cell switching signal in step S1002 in Fig. 11 or a value immediately before the reception) used in the source.

The third condition includes, for example, at least one of a condition that a parameter indicating that the LTM is performed is configured in the terminal apparatus 100, a condition that the first parameter is configured in the terminal apparatus 100, and a condition that the cell switching to the cell X does not involve security key update. The third condition including these conditions may be described as, for example, a third condition related to cell switching.

Note that the radio bearer configured in the terminal apparatus 100 may be an SRB and/or a DRB and/or an MRB.

Next, in the RRC connection reestablishment procedure, the terminal apparatus 100 performs cell selection and performs processing according to the selected cell (step S1402). Note that the cell selection procedure may be performed as a part of the RRC connection reestablishment procedure, or may be performed separately from the RRC connection reestablishment procedure.

In a case where the cell selected by the terminal apparatus 100 is an NR cell and is one (for example, a cell Y) of the cells fulfilling the second condition, the terminal apparatus 100 applies the configuration of the cell change destination candidate for the cell Y and performs the processing of switching the cell to the cell Y. Note that the processing of switching the cell to the cell Y is performed, for example, in a case where the first parameter is configured in the terminal apparatus 100.

Note that the terminal apparatus 100 may apply the configuration of the cell change destination candidate for the cell Y and reestablish at least one of the RLC entities configured in the terminal apparatus 100 before or when performing processing of switching the cell to the cell Y. At least one of the RLC entities is, for example, an RLC entity associated with the MCG.

Further, the terminal apparatus 100 may apply the configuration of the cell change destination candidate for the cell Y and perform PDCP recovery in at least one of the PDCP entities configured in the terminal apparatus 100 before or when performing processing of switching the cell to the cell Y. At least one of the PDCP entities is, for example, a PDCP entity of the AM DRB.

Note that the terminal apparatus 100 may apply the processing of step S1401 even after a normal handover failure or a conditional handover failure. For example, in a case where the process of step S1401 is applied after a normal handover failure or a conditional handover failure, the normal handover or the conditional handover before the failure is performed in a case where security key update is not involved. That is, in a case where the normal handover or the conditional handover before the failure involves security key update, the processing of step S1401 is not applied, and all the configurations including the state variables are returned to the configurations used in the source PCell.

In addition, after the normal handover failure or the conditional handover failure, the terminal apparatus 100 may return all the configurations including the state variables to the configurations used in the source PCell without applying the processing of step S1401 regardless of whether or not the normal handover or the conditional handover before the failure involves security key update. Further, in the case of the RRC connection reestablishment procedure after the normal handover failure or the conditional handover failure, in a case where the cell selected by the terminal apparatus 100 is an NR cell, the NR cell is a cell fulfilling the second condition, and the first parameter is configured in the terminal apparatus 100, when the handover before the failure is a handover that involves security key update, the terminal apparatus 100 may perform the cell switching on the selected cell, and when the handover before the failure is a handover that does not involve security key update, the terminal apparatus 100 may transmit the RRC reestablishment request message to the base station apparatus 200 in the selected NR cell.

Note that the normal handover is, for example, PCell switching activated when the terminal apparatus 100 receives the RRC reconfiguration message including the reconfiguration-with-synchronization parameter from the base station apparatus 200.

Further, in the RRC connection reestablishment procedure, in a case where the selected cell is an NR cell and at least one of the following conditions H to J is fulfilled, the terminal apparatus 100 transmits the RRC reestablishment request message to the base station apparatus 200 in the selected cell. In this case, for example, the terminal apparatus 100 releases the stored configuration of the cell change destination candidate before transmitting the RRC reestablishment request message to the base station apparatus 200. Further, at this time, for example, before transmitting the RRC reestablishment request message to the base station apparatus 200, in a case where some or all of the values of the state variables in the entities of the radio bearer configured in the terminal apparatus 100 are retained in step S1401, the terminal apparatus 100 may return the retained values of the state variables to values (values when receiving the cell switching signal in step S1002 in Fig. 11 or values immediately before the reception) used in the source PCell. The processing of returning the values of the state variables retained in step S1401 to the values used in the source before transmitting the RRC reestablishment request message to the base station apparatus 200 is performed, for example, in a case where the first parameter is configured.

Condition H: The selected cell is not one of the cells fulfilling the second condition.

Condition I: The first parameter is not configured.

Condition J: In the RRC connection reestablishment procedure after a handover failure or after a failure in handover to a different RAT, the handover before the failure or the handover to the different RAT is a handover or a handover to a different RAT that does not involve security key change. Note that the handover failure may be rephrased to as a cell switching failure.

In addition, in the RRC connection reestablishment procedure, the terminal apparatus 100 transitions to the RRC idle mode in a case where the selected cell is a cell of a RAT other than NR or in a case where cell selection is unable to be performed within a predetermined time.

### <Cell Switching Failure Processing 4 for Avoiding Key Stream Reuse Problem>

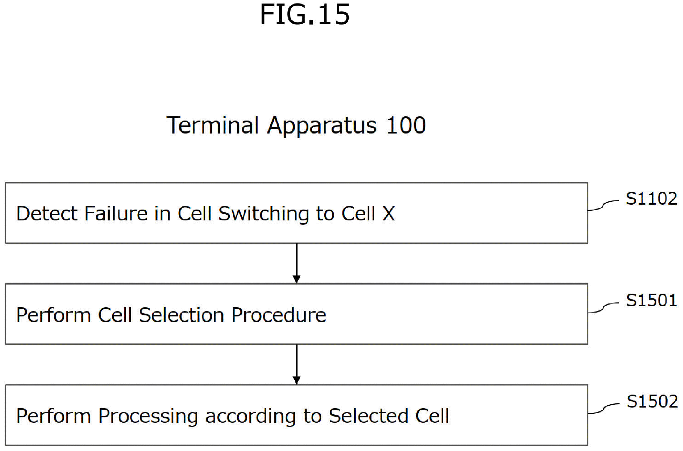

Fig. 15 is a diagram illustrating an example of a fourth cell switching failure processing method.

The terminal apparatus 100 detects a failure in cell switching to the cell X (S1102).

Next, the terminal apparatus 100 performs a cell selection procedure (S1501). The terminal apparatus 100 may stop some or all of the timers in operation before performing the cell selection procedure. In addition, the terminal apparatus 100 may start a timer for limiting the time for performing the cell selection procedure to a certain time.

In addition, in a case where the third condition is fulfilled, when or before performing the cell selection procedure, the terminal apparatus 100 may perform the cell selection procedure using the configuration of the terminal apparatus 100 at the time of the cell switching failure without returning the configuration of the terminal apparatus 100 to the configuration used in the source PCell. In addition, in a case where the third condition is not fulfilled, the terminal apparatus 100 may return the configuration of the terminal apparatus 100 to the configuration used in the source PCell.

In addition, the cell selection procedure may be performed as a part of the RRC connection reestablishment procedure, or may be performed separately from the RRC connection reestablishment procedure.

Next, the terminal apparatus 100 performs processing according to the selected cell (S1502).

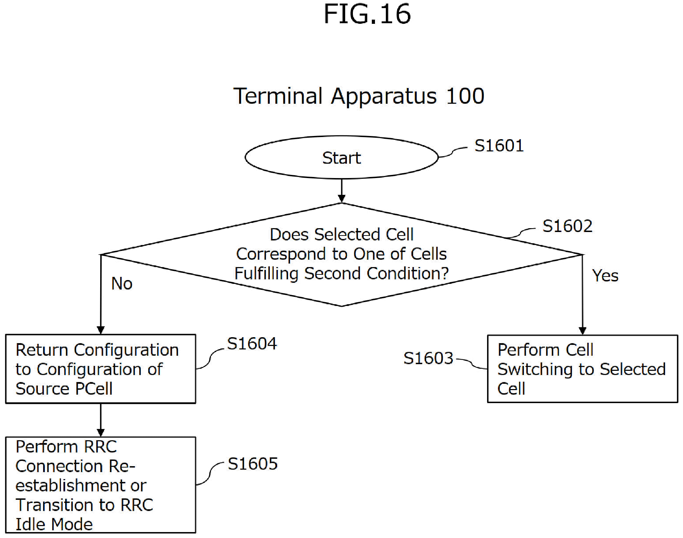

Fig. 16 is a diagram illustrating an example of processing according to the selected cell in step S1502. The terminal apparatus 100 starts processing according to the selected cell (S1601).

The terminal apparatus 100 determines whether the selected cell is one of cells fulfilling the second condition (S1602).

In a case where the selected cell is one of the cells fulfilling the second condition (for example, a cell Y) (step S1602: Yes), the terminal apparatus 100 performs cell switching to the selected cell (cell Y) (S1603). The processing of performing the cell switching to the selected cell in a case where the selected cell is one of the cells fulfilling the second condition is performed, for example, in either a case where a parameter indicating that the LTM is performed is configured in the terminal apparatus 100 or a case where at least the first parameter is configured in the terminal apparatus 100, or in a case where both of the cases are fulfilled.

When performing the cell switching to the cell Y or before performing the switching, the terminal apparatus 100 may release a part of the retained information. The part of the retained information may include, for example, information obtained through early TA measurement or early TA acquisition. The information obtained through the early TA measurement or the early TA acquisition may include, for example, information including TA information and a value of a TA timer for the TA.

When performing the cell switching to the cell Y or before switching, the terminal apparatus 100 may generate a configuration of the cell Y to be used in the cell Y. That is, in a case of storing the reference configuration, the terminal apparatus 100 generates the configuration to be used in the cell Y by applying the configuration of the cell Y to be stored to the reference configuration. In addition, in a case where the reference configuration is not stored or in a case where the configuration of the cell change destination candidate to be stored is a complete configuration, the terminal apparatus 100 may generate the configuration to be used in the cell Y by replacing the configuration used in the current cell with the configuration of the cell Y to be stored or by replacing the configuration used in the current cell with the configuration of the cell Y to be stored except for a fixed configuration. When generating the configuration to be used in the cell switching destination, the terminal apparatus 100 does not return some or all of the values of the state variables, the timers, and the like used in each entity (an SDAP entity, a PDCP entity, an RLC entity, a MAC entity, or the like) to the initial states in some cases. That is, the terminal apparatus 100 may retain some or all of the values of the state variables, the timers, and the like used in each entity. In addition, when generating the configuration used in the cell switching destination, the terminal apparatus 100 need not discard a part or all of the buffers in each entity. That is, the terminal apparatus 100 may retain some or all of values of the state variables, the timers, and the like used in each entity. In addition, the terminal apparatus 100 may retain some or all of the buffers in each entity.

In addition, when or before performing the cell switching to the cell Y, the terminal apparatus 100 may reestablish at least one of the RLC entities configured in the terminal apparatus 100. At least one of the RLC entities is, for example, an RLC entity associated with the MCG.

In addition, when or before performing the cell switching to the cell Y, the terminal apparatus 100 may perform PDCP recovery in at least one of the PDCP entities configured in the terminal apparatus 100. At least one of the PDCP entities is, for example, a PDCP entity of the AM DRB.

In addition, when performing the cell switching to the cell Y, the terminal apparatus 100 may perform the cell switching using the four-step or two-step CFRA, the four-step or two-step CBRA, or the RACH-less. The terminal apparatus 100 may determine which cell switching method to use (whether to use four-step or two-step CFRA, four-step or two-step CBRA, or RACH-less for cell switching) according to the configuration of the cell Y. In addition, when performing cell switching to the cell Y, the terminal apparatus 100 may perform the cell switching using RACH-less in a case where a fourth condition is fulfilled. The fourth condition includes, for example, a case where the terminal apparatus 100 retains valid TA for the cell Y. The valid TA includes, for example, that a TA timer for the TA has not expired. Note that the fourth condition may be described as a fourth condition related to cell switching.

At the time of cell switching to the cell Y or after the cell switching, the terminal apparatus 100 transmits a notification indicating that the cell has been switched (the processing in step S1004 in Fig. 10). The notification indicating that the cell has been switched is, for example, an RRC reconfiguration complete message. The notification indicating that the cell has been switched may include information indicating recovery of the RRC connection after the cell switching failure. In addition, information related to an uplink resource for sending the notification indicating that the cell has been switched is, for example, included in an RAR, dynamically assigned by the base station apparatus 200 after the cell switching, or included in the configuration of the cell Y.

In addition, in step S1602, the terminal apparatus 100 determines whether or not the selected cell is one of the cells fulfilling the second condition, and, in a case where the selected cell is not one of the cells fulfilling the second condition (S1602: No), returns the configuration of the terminal apparatus 100 to the configuration used in the source PCell (step S1604). In this case, the terminal apparatus 100 may also return the values of the state variables, the timers, and the like used in each entity to values specified in the source PCell. Note that whether or not at least the first parameter is configured in the terminal apparatus 100 may be added to the condition of step S1602. In this case, for example, in a case where the selected cell is not one of the cells fulfilling the second condition and/or in a case where at least the first parameter is not configured in the terminal apparatus 100, the configuration of the terminal apparatus 100 is returned to the configuration used in the source PCell.

Next, the terminal apparatus 100 reestablishes the RRC connection or transitions to the RRC idle mode (step S1605). For example, in a case where the selected cell is an NR cell, the terminal apparatus 100 reestablishes the RRC connection. In a case where the selected cell is an NR cell, the terminal apparatus 100 transmits the RRC reestablishment request message to the base station apparatus 200 in the selected cell. In this case, the terminal apparatus 100 releases, for example, the stored configuration of the cell change destination candidate before transmitting the RRC reestablishment request message to the base station apparatus 200. In addition, for example, in a case where the selected cell is a cell of a RAT other than NR, or in a case where cell selection is unable to be performed within a predetermined time, the terminal apparatus 100 transitions to the RRC idle mode.

The processing in step S1605 is performed, for example, as a part of the RRC connection reestablishment procedure. Note that, in a case where the cell selection procedure in step S1501 is performed separately from the RRC connection reestablishment procedure, the terminal apparatus 100 does not need to perform the cell selection procedure in the RRC connection reestablishment procedure. In addition, the terminal apparatus 100 may reset MAC and suspend at least one of the radio bearers before performing the processing in step S1605. A radio bearer to be suspended does not need to include at least SRB0. In addition, the terminal apparatus 100 may release at least one of the pieces of retained information before performing the processing in step S1605. In addition, the terminal apparatus 100 may stop some or all of the timers in operation before performing the processing in step S1605.

Thereby, the terminal apparatus 100 and the base station apparatus 200 can avoid the key stream reuse problem and perform secure communication in the cell switching failure processing of the terminal apparatus 100.

In addition, in the cell switching failure processing, the fact that the selected cell is one of the cell change destination candidates stored in the terminal apparatus 100 includes, for example, that the selected cell is one of PCells that are cell change destination candidates stored in the terminal apparatus 100. In addition, the fact that the selected cell is one of the cell change destination candidates stored in the terminal apparatus 100 includes, for example, that the selected cell is one of the PCells included in the configuration of the cell change destination candidate received in step S1001 in Fig. 11. That is, in the cell switching failure processing, even if the selected cell is one of the cells included in the cell change destination candidates stored in the terminal apparatus 100, in a case where the selected cell is an SCell, the selected cell is not regarded as one of the cell change destination candidates stored in the terminal apparatus 100 in some cases.

Similarly, in the cell switching failure processing, the fact that the selected cell is one of the cells fulfilling the second condition includes, for example, that the selected cell is one of the PCells fulfilling the second condition.

In addition, the fact that the cell switching involves security key update means that, for example, a parameter related to master key update is included in the configuration of the cell change destination candidate. In addition, the fact that the handover involves security update means that, for example, a parameter related to master key update is included in the RRC reconfiguration message including the reconfiguration-with-synchronization parameter received or applied by the terminal apparatus 100. The parameter related to master key update is, for example, a masterKeyUpdate parameter.

In addition, the terminal apparatus 100 releases at least one of the LTM configurations, for example, in a case where the cell switching or the handover involving security key update is successful.

Note that, although the case where the cell change destination candidate in the LTM is configured and/or stored in the terminal apparatus 100 has been described, the present embodiment may be applied to other technologies, for example, a case where a PCell change destination candidate of a conditional handover is configured and/or stored. In addition, for example, the present embodiment may be applied to processing after a handover (reconfiguration with synchronization) failure in a non-terrestrial network (NTN).

In addition, although the four types of cell switching failure processing are disclosed in the present embodiment, a cell switching failure processing method to be applied may be selected depending on whether the processing is processing after the cell switching failure by the LTM or processing after a normal handover (including a conditional handover) has failed. For example, the cell switching failure 4 is applied in the case of the processing after the cell switching failure by the LTM, and the cell switching failure 1, the cell switching failure 2, or the cell failure processing 3 is applied in the case of the processing after the handover (reconfiguration with synchronization) failure.

### <Others>

Some of the messages on the sequence described above are not performed in order or the order is partially changed in some cases. In addition, some of the messages on the sequence are not performed in some cases.

In addition, a function and processing described as the function and the processing of the terminal apparatus 100 may be the function and the processing of the base station apparatus 200. In addition, a function and processing described as the function and the processing of the base station apparatus 200 may be the function and the processing of the terminal apparatus 100.

In addition, in a case where a signaling radio bearer and a data radio bearer are simply referred to as "radio bearer" without distinguishing the signaling radio bearer and the data radio bearer, the radio bearer may be a signaling radio bearer, a data radio bearer, or both a signaling radio bearer and a data radio bearer.

In addition, "A may be rephrased as B" includes a meaning of paraphrasing B as A in addition to paraphrasing A as B.

In addition, in the case that the condition of "A" and the condition of "B" are opposite to each other, the condition of "B" may be expressed as "other" conditions of the condition of "A".

In summary, the following is obtained.
(1) A terminal apparatus including: a receiver configured to receive, from a base station apparatus, a radio resource control (RRC) reconfiguration message including a reconfiguration with synchronization; and a processor configured to execute handover in response to the RRC reconfiguration message, in which the processor is configured to perform control to execute first processing in a case where a failure of the handover is detected, and the first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.
(2) The terminal apparatus according to (1), in which the processor is configured to: perform processing to reestablish at least one of RLC entities when LTM cell switching to a first cell according to the first configuration is failed and before LTM cell switching to a second cell fulfilling a first condition related to cell switching is performed.
(3) The terminal apparatus according to (2), in which the first condition is that the second cell corresponds to one of the one or the plurality of cell change destination candidates.
(4) The terminal apparatus according to any one of (1) to (3), in which the receiver is configured to receive a signal including information of one or a plurality of cell change destination candidates, and the processor is configured to perform the first configuration according to the signal.
(5) The terminal apparatus according to any one of (1) to (4), in which the processor is configured to: execute cell selection in a case where a failure of the handover is detected; and perform the first processing in a case where the selected cell fulfills a second condition related to cell selection and a first parameter is configured for the cell.
(6) The terminal apparatus according to (5), in which the second condition is that the selected cell is a cell for which recovery of an RRC connection is permitted, and the first parameter is a parameter related to recovery of the RRC connection.
(7) A base station apparatus including: a transmitter configured to transmit, to a terminal apparatus, a radio resource control (RRC) reconfiguration message including a reconfiguration with synchronization; and a processor configured to cause the terminal apparatus to execute handover by transmitting the RRC reconfiguration message to the terminal apparatus, in which the processor is configured to perform control to cause the terminal apparatus to execute first processing in a case where the terminal apparatus detects a failure of the handover, and the first processing is processing of performing control such that the terminal apparatus performs LTM cell switching according to a first configuration including one or a plurality of cell change destination candidates in a case where a security key is updated when executing the handover, and performing control to cause the terminal apparatus to request reestablishment of an RRC connection in a case where a security key is not updated when executing the handover.
(8) The base station apparatus according to (7), further including: a receiver configured to receive a signal for requesting reestablishment of the RRC connection in a case where the terminal apparatus is controlled to request reestablishment of the RRC connection.
(9) A radio communication system including: a base station apparatus configured to transmit a radio resource control (RRC) reconfiguration message including a reconfiguration with synchronization; and a terminal apparatus configured to receive the RRC reconfiguration message and execute handover according to the RRC reconfiguration message, in which the terminal apparatus is configured to perform control to execute first processing in a case where a failure of the handover is detected, and the first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.

Note that, although an example of the apparatus has been described in each embodiment, the method of the present disclosure is not limited to a cellular phone, a smartphone, a tablet terminal, a base station apparatus, and the like, and can be applied to other electronic apparatuses, for example, electronic apparatuses mounted on automobiles, trains, airplanes, artificial satellites, and the like, electronic apparatuses mounted on drones and the like, robots, AV apparatuses, home appliances, office apparatuses, vending machines, other home appliances, industrial apparatuses, and the like.

In addition, in each embodiment, E-UTRA or NR is used as a radio access technology, and EPC or 5GC is used as a core network. However, the method of the present disclosure is not limited to these. For example, the form of the present disclosure may be applied to radio access technologies or networks of different generations such as sixth generation or seventh generation.

In addition, the above embodiment is an example, and various modifications can be made.

In addition, each embodiment has been described in detail with reference to the drawings, but the specific configuration is not limited to the disclosed drawings and the described embodiments.

### [Reference Signs List]

- 10: Communication system
- 100: Terminal apparatus
- 110: CPU
- 120: Storage
- 121: Radio communication program
- 122: Terminal-side program
- 130: Memory
- 140: Radio communication circuit
- 200: Base station apparatus
- 210: CPU
- 220: Storage
- 221: Radio communication program
- 222: Base-station-side program
- 230: Memory
- 240: Radio communication circuit
- 250: Network interface
- 300: Core network

## Claims

1. A terminal apparatus comprising:
a receiver configured to receive, from a base station apparatus, a radio resource control (RRC) reconfiguration message including a reconfiguration with synchronization; and
a processor configured to execute handover in response to the RRC reconfiguration message, wherein
the processor is configured to perform control to execute first processing in a case where a failure of the handover is detected, and
the first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.

2. The terminal apparatus according to claim 1, wherein
the processor is configured to:
perform processing to reestablish at least one of RLC entities when LTM cell switching to a first cell according to the first configuration is failed and before LTM cell switching to a second cell fulfilling a first condition related to cell switching is performed.

3. The terminal apparatus according to claim 2, wherein
the first condition is that the second cell corresponds to one of the one or the plurality of cell change destination candidates.

4. The terminal apparatus according to claim 1, wherein
the receiver is configured to receive a signal including information of one or a plurality of cell change destination candidates, and
the processor is configured to perform the first configuration according to the signal.

5. The terminal apparatus according to claim 1, wherein
the processor is configured to:
execute cell selection in a case where a failure of the handover is detected; and
perform the first processing in a case where the selected cell fulfills a second condition related to cell selection and a first parameter is configured for the cell.

6. The terminal apparatus according to claim 5, wherein
the second condition is that the selected cell is a cell for which recovery of an RRC connection is permitted, and
the first parameter is a parameter related to recovery of the RRC connection.

7. A base station apparatus comprising:
a transmitter configured to transmit, to a terminal apparatus, a radio resource control (RRC) reconfiguration message including a reconfiguration with synchronization; and
a processor configured to cause the terminal apparatus to execute handover by transmitting the RRC reconfiguration message to the terminal apparatus, wherein
the processor is configured to perform control to cause the terminal apparatus to execute first processing in a case where the terminal apparatus detects a failure of the handover, and
the first processing is processing of performing control such that the terminal apparatus performs LTM cell switching according to a first configuration including one or a plurality of cell change destination candidates in a case where a security key is updated when executing the handover, and performing control to cause the terminal apparatus to request reestablishment of an RRC connection in a case where a security key is not updated when executing the handover.

8. The base station apparatus according to claim 7, further comprising:
a receiver configured to receive a signal for requesting reestablishment of the RRC connection in a case where the terminal apparatus is controlled to request reestablishment of the RRC connection.

9. A radio communication system comprising:
a base station apparatus configured to transmit a radio resource control (RRC) reconfiguration message including a reconfiguration with synchronization; and
a terminal apparatus configured to receive the RRC reconfiguration message and execute handover according to the RRC reconfiguration message, wherein
the terminal apparatus is configured to perform control to execute first processing in a case where a failure of the handover is detected, and
the first processing is processing of performing control to perform LTM cell switching according to a first configuration including one or a plurality of cell change destination candidates in a case where a security key is updated when executing the handover, and performing control to request the base station apparatus to reestablish an RRC connection in a case where a security key is not updated when executing the handover.
